(19) Europäisches Patentamt / European Patent Office / Office européen des brevets

(11) **EP 4 057 136 B1**

(12) **EUROPEAN PATENT SPECIFICATION**

(45) Date of publication and mention
of the grant of the patent:
**06.08.2025 Bulletin 2025/32**

(21) Application number: **20892407.6**

(22) Date of filing: **10.11.2020**

(51) International Patent Classification (IPC):
*G06F 21/84* (2013.01)  *G06F 9/451* (2018.01)
*G06F 1/16* (2006.01)  *G06F 3/0487* (2013.01)

(52) Cooperative Patent Classification (CPC):
**G06F 9/451; G06F 1/1652; G06F 1/1677;
G06F 3/0487; G06F 21/84;** G06F 2203/04803

(86) International application number:
**PCT/CN2020/127801**

(87) International publication number:
**WO 2021/104008 (03.06.2021 Gazette 2021/22)**

(54) **METHOD FOR DISPLAYING FOLDING SCREEN AND RELATED APPARATUS**

VERFAHREN ZUR ANZEIGE EINES FALTSCHIRMS UND ZUGEHÖRIGE VORRICHTUNG

PROCÉDÉ D'AFFICHAGE D'UN ÉCRAN PLIABLE ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2019 CN 201911199089
22.01.2020 CN 202010075889**

(43) Date of publication of application:
**14.09.2022 Bulletin 2022/37**

(73) Proprietor: **Huawei Technologies Co., Ltd.
Shenzhen, Guangdong 518129 (CN)**

(72) Inventor: **ZHANG, Xin
Shenzhen, Guangdong 518129 (CN)**

(74) Representative: **Grünecker Patent- und
Rechtsanwälte
PartG mbB
Leopoldstraße 4
80802 München (DE)**

(56) References cited:
EP-A1- 2 980 674     CN-A- 109 840 061
CN-A- 109 840 061    CN-A- 109 889 630
CN-A- 110 045 936    CN-A- 110 286 972
CN-A- 110 381 282    CN-A- 110 381 282
KR-A- 20160 001 602  US-A1- 2015 378 503

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## TECHNICAL FIELD

This application relates to the field of electronic technologies, and in particular, to a display method for a foldable screen and a related apparatus.

## BACKGROUND

With continuous development of electronic devices, increasingly more electronic devices with displays, such as mobile phones with displays, are widely applied to daily life and work of people. In addition, with development of screen technologies, the display of the electronic device also becomes larger, to provide richer information for a user and bring better use experience to the user.

However, an excessively large display of the electronic device severely affects portability of the electronic device. Therefore, electronic devices provided with foldable screens (for example, foldable mobile phones) proposed in recent years are a future development direction of electronic devices.

Currently, forms of a foldable screen may include a folded state and an unfolded state. When the foldable screen is in the folded state, the foldable screen can be folded to form at least two screens. The electronic device may display an interface of an application on one of the screens. After the foldable screen is unfolded, a display area of the foldable screen includes the at least two screens, and the electronic device may display an interface for displaying applications in the entire display area of the foldable screen. Currently, there are only two forms of foldable screens, and an interface of an application can only be fixedly displayed at a specified location of the foldable screen. This is inflexible, and cannot meet a requirement for using an electronic device by a plurality of users.

CN 109 840 061 A discloses a method for controlling screen display, which is applied to an electronic device configured with a foldable touch display screen, the touch display screen displays a first interface, and the touch display screen includes a first area and a second area, the method includes: when the touch display is in a folded configuration, detecting a user's first touch operation on the touch display; in response to the detected first touch operation, determining the first touch operation of the first area of the touch display whether a touch area is greater than or equal to a second touch area of a second area of the touch display screen; in response to determining that the first touch area is greater than or equal to the second touch area, the electronic device turns off the first area, and the first interface is displayed in the second area. If the electronic device is in a folded state, the screen facing the user can be automatically lit according to the detection of the user's touch hand shape and grip posture on the touch screen. When the electronic device is turned over or the screen display of the touch screen is abnormal, the user can correct the screen display mode, such as double-clicking the display screen to switch between extinguished and lit states. This solution can recognize the user's grip posture through the cooperation of multiple components such as the touch sensor, acceleration sensor, gyroscope sensor, and power button of the electronic device, and then determine the touch display of the folded electronic device according to the user's grip posture The positional relationship between the first area and the second area of the screen and the user determines the display screen facing the user, realizes intelligent control of the lighting and extinguishing of the touch screen, reduces user operations, and improves the folding experience of the multi-screen mobile phone system.

## SUMMARY

Embodiments of this application provide a display method for a foldable screen and a related apparatus, so that displayed content on a first screen and a second screen can be controlled based on a folding angle and a placement posture of a foldable screen and a placement form. In this way, it can be convenient for a user to interact with an electronic device without holding the electronic device stably, to improve user interaction experience.

According to a first aspect, an embodiment of this application provides a display method applied to an electronic device comprising a processor and a foldable screen, wherein the foldable screen can be folded along a folding line to form a first screen and a second screen, each of the first and second screen comprising a gyro sensor, wherein the method comprises:

when detecting that the foldable screen is in an unfolded form, displaying, by the electronic device, a first interface on the foldable screen in full screen mode, wherein the first interface runs on a first operating system; and

when detecting that the foldable screen is switched from the unfolded form to a half-folded form, based on a location relationship between a horizontal plane of a material object and each of the first screen and the second screen detected by the processor based on data detected by the gyro sensors, an outer edge of the first screen parallel to the folding line being in contact with the object and an outer edge of the second screen parallel to the folding line being in contact with the object, controlling, by the electronic device, the first screen to display a second interface and the second screen to display a third interface, wherein

when the foldable screen is in the unfolded form, an included angle between the first screen and the second screen detected by the processor based on data detected by the gyro sensors, is greater than a first angle threshold; and when the foldable screen is in the half-folded form, the included angle between the first screen and the second screen is between the first angle threshold and a second angle threshold, wherein the first angle threshold is greater than the second angle threshold;

wherein the controlling, by the electronic device, the first screen to display a second interface, and controlling the second screen to display a third interface, based on a location relationship between a horizontal plane and each of the first screen and the second screen specifically comprises:

determining, by the electronic device based on the location relationship between the horizontal plane and each of the first screen and the second screen, that a placement posture of the foldable screen is a first placement posture; and

controlling, by the electronic device, to display the second interface on the first screen by running the first operating system, and to display the third interface on the second screen by running a second operating system, wherein

when the foldable screen is in the first placement posture, the foldable screen is folded outward, an included angle between the first screen and the horizontal plane is between a third angle threshold and a fourth angle threshold, and an included angle between the second screen and the horizontal plane is between the third angle threshold and the fourth angle threshold, wherein the third angle threshold is greater than the fourth angle threshold.

An embodiment of this application provides a display method for a foldable screen, applied to an electronic device including a foldable screen. The foldable screen can be folded to form a first screen and a second screen. When the foldable screen is in a half-folded form, the electronic device may control displayed content on the first screen and the second screen based on a location relationship between a horizontal plane and each of the first screen and the second screen. In this way, it can be convenient for a user to interact with the electronic device without holding the electronic device stably, to improve user interaction experience.

Respective home screens or application interfaces of the two operating systems can be respectively displayed on the first screen and the second screen of the foldable screen, so that a plurality of users simultaneously use one electronic device without affecting each other.

In a possible implementation, the method further includes: When detecting that the foldable screen is switched from the half-folded form to a fully folded form, the electronic device displays a fourth interface on the first screen, and turns off the second screen, where the fourth interface runs on the first operating system; and when the foldable screen is in the fully folded form, the included angle between the first screen and the second screen is less than the second angle threshold.

In a possible implementation, the electronic device determines, based on the location relationship between the horizontal plane and each of the first screen and the second screen, that a placement posture of the foldable screen is a second placement posture. The electronic device controls the first screen to display the second interface, and turns off the second screen, where the second interface runs on the first operating system; and when the foldable screen is in the second placement posture, the foldable screen is folded outward, and an included angle between the second screen and the horizontal plane is less than a fifth angle threshold. In this way, the electronic device 100 can be placed on an object by using the screen B as a support, and the mobile phone can be operated (for example, to watch a movie) on the first screen without using an auxiliary support, to improve user operation experience.

The second interface includes a function control. The method further includes: The electronic device receives a first operation performed by a user on the function control. In response to the first operation, the electronic device enables a function corresponding to the function control.

For example, that the electronic device enables a function corresponding to the function control specifically includes: The electronic device opens a flash. Alternatively, the electronic device opens a camera on the first screen, and displays, on the first screen, an image captured by the camera on the first screen. In this way, the user may use the electronic device as a comb mirror and does not need to hold the electronic device, so that the user can dress up conveniently. Alternatively, the electronic device can be used as a convenient desk lamp, and the user may adjust an illumination direction by changing the included angle between the first screen and the second screen, to improve user experience.

In a possible implementation, the electronic device determines, based on the location relationship between the horizontal plane and each of the first screen and the second screen, that a placement posture of the foldable screen is a third placement posture. The electronic device controls the first screen to display the second interface, and controls running of the second screen to display the third interface, where the second interface includes a first part of displayed content in the first interface, and the third interface includes a second part of the displayed content in the first interface; and when the foldable screen is in the third placement posture, the foldable screen is folded inward, an included angle between the first screen and the horizontal plane is between a sixth angle threshold and a seventh angle threshold, and an included angle between the second screen and the horizontal plane is between the sixth angle threshold and the seventh angle threshold, where the sixth angle threshold is less than 90 degrees, and the seventh angle threshold is greater than 90 degrees. In this way, like a book, the electronic device may display, on the first screen and the second screen, displayed content of a same application on pages, to improve user reading experience.

In a possible implementation, the electronic device determines, based on the location relationship between the horizontal plane and each of the first screen and the second screen, that a placement posture of the foldable screen is a fourth placement posture. The electronic device controls the first screen to display the second interface, determines an operation control corresponding to the second interface, and controls running of the second screen to display the third interface, where the third interface includes the operation control corresponding to the second interface; and when the foldable screen is in the fourth placement posture, the foldable screen is folded inward, and an included angle between the second screen and the horizontal plane is less than an eighth angle threshold. In this way, an operation control such as an input method can no longer occupy an application display interface, to provide convenience for the user.

According to a second aspect, an embodiment of this application provides an electronic device, including: a foldable screen, where the foldable screen is divided into a first screen and a second screen by a folding line when being folded; one or more processors; and one or more memories. The foldable screen can be folded to form at least two screens, the at least two screens include the first screen and the second screen, and the foldable screen, an acceleration sensor, a gyro sensor, one or more cameras, and the one or more memories are separately coupled to the one or more processors. The acceleration sensor and the gyro sensor are configured to detect data, so that the one or more processors detect an included angle between the first screen and the second screen and a location relationship between a horizontal plane and each of the first screen and the second screen. The one or more memories are configured to store computer program code, where the computer program code includes computer instructions. When the computer instructions are run on the processor, the electronic device is enabled to perform the following steps: when detecting that the foldable screen is in an unfolded form, displaying a first interface on the foldable screen in full screen mode, where the first interface runs on a first operating system; and when detecting that the foldable screen is switched from the unfolded form to a half-folded form, controlling the first screen to display a second interface, and controlling the second screen to display a third interface or to be turned off, based on a location relationship between a horizontal plane and each of the first screen and the second screen, where when the foldable screen is in the unfolded form, an included angle between the first screen and the second screen is greater than a first angle threshold; and when the foldable screen is in the half-folded form, the included angle between the first screen and the second screen is between the first angle threshold and a second angle threshold, where the first angle threshold is greater than the second angle threshold.

In a possible implementation, when the computer instructions are run on the processor, the electronic device is enabled to specifically perform the following steps: determining, based on the location relationship between the horizontal plane and each of the first screen and the second screen, that a placement posture of the foldable screen is a first placement posture; and controlling to display the second interface on the first screen by running the first operating system, and to display the third interface on the second screen by running a second operating system, where when the foldable screen is in the first placement posture, the foldable screen is folded outward, an included angle between the first screen and the horizontal plane is between a third angle threshold and a fourth angle threshold, and an included angle between the second screen and the horizontal plane is between the third angle threshold and the fourth angle threshold.

In a possible implementation, when the computer instructions are run on the processor, the electronic device is enabled to further perform the following steps: when detecting that the foldable screen is switched from the half-folded form to a fully folded form, displaying a fourth interface on the first screen, and turning off the second screen, where the fourth interface runs on the first operating system; and when the foldable screen is in the fully folded form, the included angle between the first screen and the second screen is less than the second angle threshold.

In a possible implementation, when the computer instructions are run on the processor, the electronic device is enabled to specifically perform the following steps: determining, based on the location relationship between the horizontal plane and each of the first screen and the second screen, that a placement posture of the foldable screen is a second placement posture; and controlling the first screen to display the second interface, and turning off the second screen, where the second interface runs on the first operating system; and when the foldable screen is in the second placement posture, the foldable screen is folded outward, and an included angle between the second screen and the horizontal plane is less than a fifth angle threshold.

In a possible implementation, the second interface includes a function control; and when the computer instructions are run on the processor, the electronic device is enabled to further perform the following steps: receiving, by the electronic device, a first operation performed by a user on the function control; and in response to the first operation, enabling, by the electronic device, a function corresponding to the function control.

In a possible implementation, when the computer instructions are run on the processor, the electronic device is enabled to specifically perform the following steps: opening a flash in response to the first operation; or in response to the first operation, opening a camera on the first screen, and displaying, on the first screen, an image captured by the camera on the first screen.

In a possible implementation, when the computer instructions are run on the processor, the electronic device is enabled to specifically perform the following steps: determining, based on the location relationship between the horizontal plane and each of the first screen and the second screen, that a placement posture of the foldable screen is a third placement posture; and controlling the first screen to display the second interface, and controlling running of the second screen to display the third interface, where the second interface includes a first part of displayed content in the first interface, and the third interface includes a second part of the displayed content in the first interface; and when the foldable screen is in the third placement posture, the foldable screen is folded inward, an included angle between the first screen and the horizontal plane is between a sixth angle threshold and a seventh angle threshold, and an included angle between the second screen and the horizontal plane is between the sixth angle threshold and the seventh angle threshold, where the sixth angle threshold is less than 90 degrees, and the seventh angle threshold is greater than 90 degrees.

In a possible implementation, when the computer instructions are run on the processor, the electronic device is enabled to specifically perform the following steps: determining, based on the location relationship between the horizontal plane and each of the first screen and the second screen, that a placement posture of the foldable screen is a fourth placement posture; and controlling the first screen to display the second interface, determining an operation control corresponding to the second interface, and controlling running of the second screen to display the third interface, where the third interface includes the operation control corresponding to the second interface; and when the foldable screen is in the fourth placement posture, the foldable screen is folded inward, the included angle between the first screen and the second screen is between the first angle threshold and the second angle threshold, and an included angle between the second screen and the horizontal plane is less than an eighth angle threshold.

According to a third aspect, an embodiment of this application provides an electronic device, including one or more functional modules. The one or more functional modules can be configured to perform the display method for a foldable screen according to any possible implementation of any one of the foregoing aspects.

According to a fourth aspect, an embodiment of this application provides a computer-readable storage medium, including computer instructions. When the computer instructions are run on an electronic device, a communications apparatus is enabled to perform the display method for a foldable screen according to any possible implementation of any one of the foregoing aspects.

According to a fifth aspect, an embodiment of this application provides a computer program product. When the computer program product runs on a computer, the computer is enabled to perform the display method for a foldable screen according to any possible implementation of any one of the foregoing aspects.

According to a sixth aspect, an embodiment of this application provides a chip, including a processor and an interface. The processor and the interface cooperate with each other, so that the chip performs the display method for a foldable screen according to any possible implementation of any one of the foregoing aspects.

## BRIEF DESCRIPTION OF DRAWINGS

FIG. 1(a), FIG. 1(b), and FIG. 1(c) are a schematic diagram of a product form of an electronic device according to an embodiment of this application;
FIG. 2(a), FIG. 2(b), and FIG. 2(c) are a schematic diagram of a product form of another electronic device according to an embodiment of this application;
FIG. 3 is a schematic flowchart of determining a placement posture according to an embodiment of this application;
FIG. 4A is a schematic diagram in which an electronic device is in a first placement posture according to an embodiment of this application;
FIG. 4B is a schematic diagram in which an electronic device is in a second placement posture according to an embodiment of this application;
FIG. 4C is a schematic diagram in which an electronic device is in a third placement posture according to an embodiment of this application;
FIG. 4D is a schematic diagram in which an electronic device is in a fourth placement posture according to an embodiment of this application;
FIG. 5 is a schematic diagram of a structure of an electronic device according to an embodiment of this application;
FIG. 6A is a schematic diagram of a principle of calculating an included angle $\alpha$ between a screen A and a screen B according to an embodiment of this application;
FIG. 6B is a schematic diagram of an instance of a geographic coordinate system according to an embodiment of this application;
FIG. 6C is a schematic diagram of a location relationship between a screen A or a screen B and a horizontal plane according to an embodiment of this application;

FIG. 7 is a schematic diagram of a software architecture of an electronic device according to an embodiment of this application;

FIG. 8A to FIG. 8C are schematic diagrams of a group of interfaces according to an embodiment of this application;

FIG. 9A to FIG. 9D are schematic diagrams of another group of interfaces according to an embodiment of this application;

FIG. 10A to FIG. 10D are schematic diagrams of another group of interfaces according to an embodiment of this application;

FIG. 11A to FIG. 11C are schematic diagrams of another group of interfaces according to an embodiment of this application;

FIG. 12A and FIG. 12B are schematic diagrams of another group of interfaces according to an embodiment of this application;

FIG. 13A and FIG. 13B are schematic diagrams of another group of interfaces according to an embodiment of this application; and

FIG. 14A and FIG. 14B are schematic diagrams of another group of interfaces according to an embodiment of this application.

## DESCRIPTION OF EMBODIMENTS

The following clearly describes the technical solutions in embodiments of this application in detail with reference to the accompanying drawings. In the descriptions of embodiments of this application, unless otherwise stated, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

An embodiment of this application provides a display method for a foldable screen. The method can be applied to an electronic device including a foldable screen. The foldable screen can be folded to form at least two screens. For example, the foldable screen can be folded to form two screens, for example, a screen A and a screen B, along a folding edge or a folding axis.

In this embodiment of this application, the foldable screen of the electronic device can be folded in two types of manners. One type is a foldable screen that is folded outward (briefly referred to as an outward foldable screen), and the other type is a foldable screen that is folded inward (briefly referred to as an inward foldable screen). For example, the foldable screen can be folded to form a first screen and a second screen. After the outward foldable screen is folded, the first screen and the second screen are back to back. After the inward foldable screen is folded, the first screen and the second screen are face to face. In the following embodiments of this application, the first screen can be referred to as a screen A, and the second screen can be referred to as a screen B.

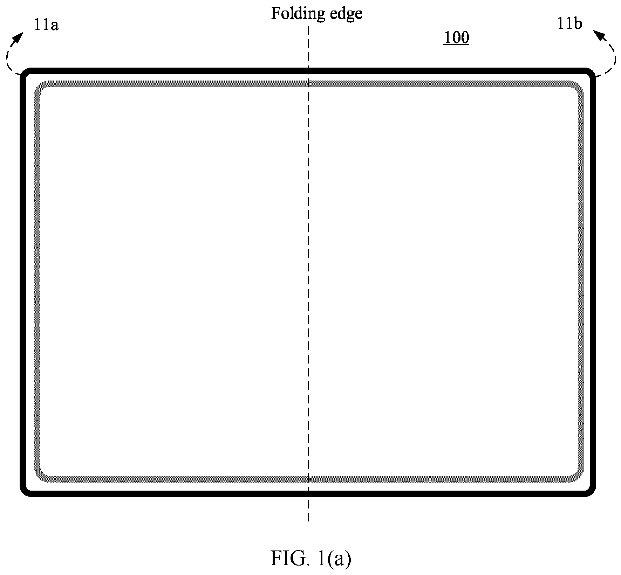

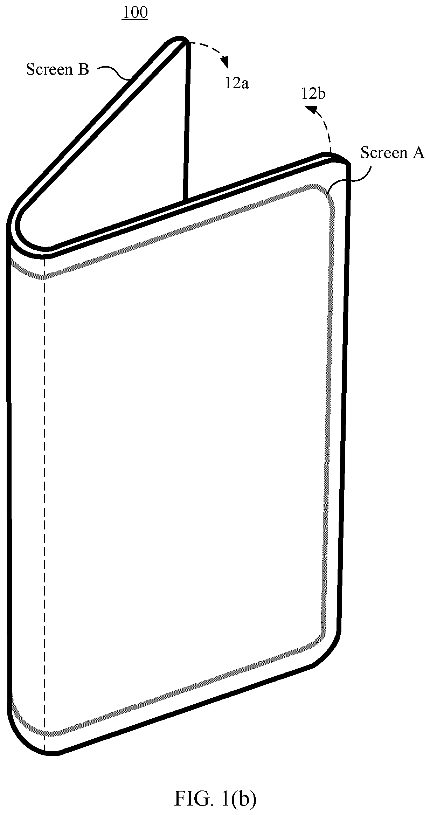

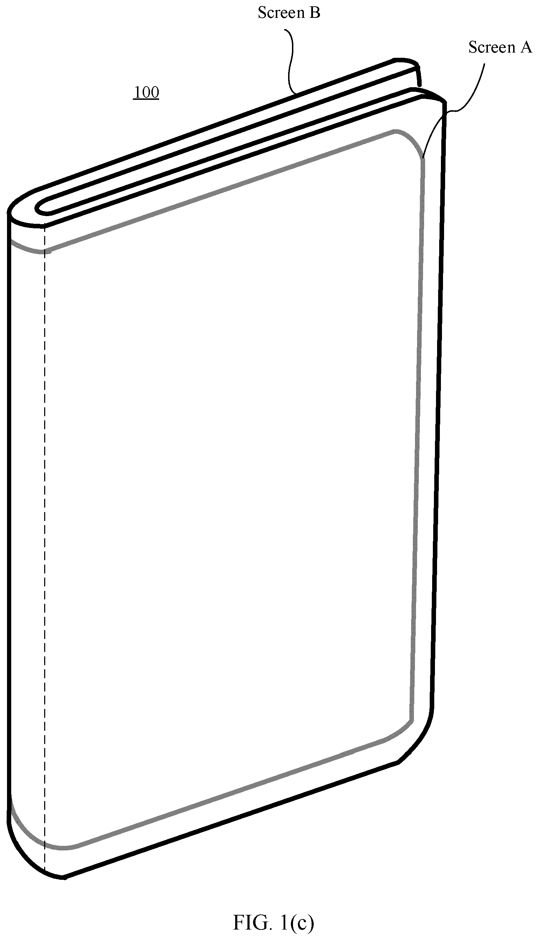

For example, FIG. 1(a), FIG. 1(b), and FIG. 1(c) are a schematic diagram of a product form of an electronic device 100 including an outward foldable screen according to an embodiment of this application. FIG. 1(a) is a schematic diagram of a form in which the outward foldable screen is fully unfolded. The outward foldable screen can be folded along a folding edge in directions 11a and 11b shown in FIG. 1(a), to form a screen A (that is, the first screen) and a screen B (that is, the second screen) in a half-folded form shown in FIG. 1(b). The outward foldable screen may continue to be folded along the folded edge in directions 12a and 12b shown in FIG. 1(b), to form a valgus foldable screen in a folded state shown in FIG. 1(c). As shown in FIG. 1(c), after the foldable screen of the electronic device 100 is fully folded, the screen A (that is, the first screen) and the screen B (that is, the second screen) are back to back, and are visible to a user.

It can be understood that, for the electronic device including the outward foldable screen, when the foldable screen is in the fully folded form or the half-folded form, the electronic device 100 may display interface content on the screen A (that is, the first screen) or the screen B (that is, the second screen). When the foldable screen is in the unfolded state, the electronic device 100 may display interface content on the screen A (that is, the first screen) and the screen B (that is, the first screen). For descriptions of the unfolded state and the folded state of the foldable screen, refer to descriptions in the following embodiments. Details are not described herein.

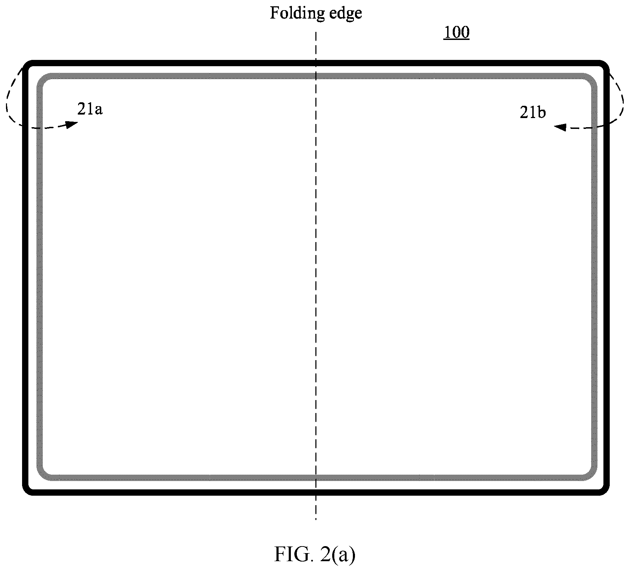

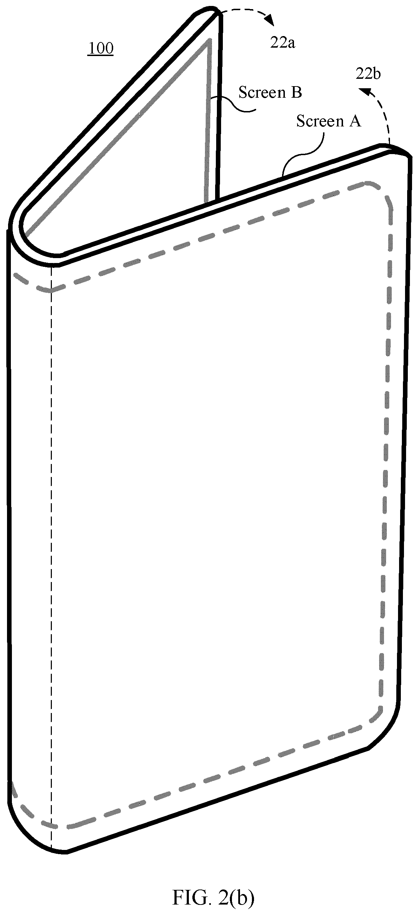

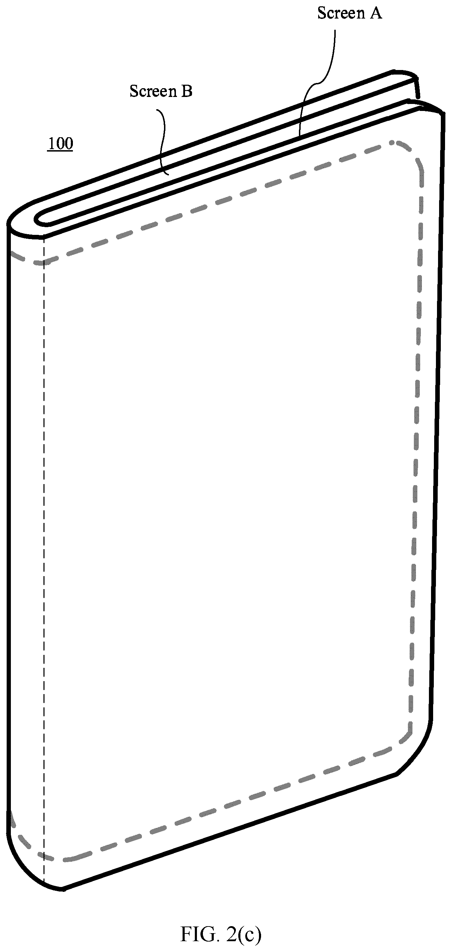

For another example, FIG. 2(a), FIG. 2(b), and FIG. 2(c) are a schematic diagram of a product form of an electronic device 100 including an inward foldable screen according to an embodiment of this application. FIG. 2(a) is a schematic diagram of a form in which the inward foldable screen is fully unfolded. The inward foldable screen can be folded along a folding edge in directions 21a and 21b shown in FIG. 2(a), to form a screen A and a screen B in a half-folded form shown in FIG. 2(b). The outward foldable screen can be folded along the folding edge based on the screen A and the screen B shown in FIG. 2(b). The inward foldable screen may continue to be folded along the folding edge in directions 22a and 22b shown in FIG. 2(b), to form a valgus foldable screen in a fully folded form shown in FIG. 2(c). As shown in FIG. 2(c), after the foldable screen of the electronic device 100 is fully folded, the screen A and the screen B are face to face, and are invisible to the user.

In this embodiment of this application, a value range of an included angle $\alpha$ between the screen A and the screen B of the foldable screen (including the inward foldable screen and the outward foldable screen) of the electronic device 100 is [0°, 180°]. If $\alpha \in$ [0, P1], the electronic device 100 determines that the foldable screen is in a fully folded form. If $\alpha \in$ (P1, P2), the electronic device 100 determines that the foldable screen is in a half-folded form. If $\alpha \in$ [P2, 180°], the electronic device 100 determines that the foldable screen is in a fully unfolded form, where 0° < P1 < P2 < 180°, P1 and P2 each can be a preset angle threshold, and P1 and P2 can be determined based on usage habits of a large quantity of users using foldable screens, or P1 and P2 can be set by the user in the electronic device 100.

In some embodiments, based on usage habits of most users, when the included angle $\alpha$ between the screen A and the screen B is greater than 150°, there is a high probability that the user expects to use the screen A and the screen B as a whole (that is, as a complete display). When the included angle $\alpha$ between the screen A and the screen B is less than 30 degrees, there is a high probability that the user expects to use the screen A or the screen B independently, and the foldable screen can be in a fully folded form. Therefore, in this embodiment of this application, a value range of the preset angle threshold P1 can be (0, 30°), and a value range of the preset angle threshold P2 can be (150°, 180°). For example, the preset angle threshold P1 can be 5°, 10°, 15°, or 20°, and the preset angle threshold P2 can be 155°, 160°, 165°, or 170°.

It should be noted that, in this embodiment of this application, at least two screens formed by folding the foldable screen (including the inward foldable screen and the outward foldable screen) can be a plurality of screens that exist independently, or can be a complete screen of an integrated structure that is folded to form at least two parts.

For example, the foldable screen can be a flexible foldable screen, and the flexible foldable screen includes a folding edge made of a flexible material. A part or all of the flexible foldable screen is made of the flexible material. At least two screens formed by folding the flexible foldable screen are a complete screen of an integrated structure that is folded to form at least two parts.

For another example, the foldable screen can be a multi-screen foldable screen. The multi-screen foldable screen includes a plurality of (two or more) screens. The plurality of screens are a plurality of separate displays. The plurality of screens can be connected sequentially through folding axes. Each screen rotates around a folding axis connected to the screen, so that the multi-screen foldable screen is folded.

In FIG. 1(a), FIG. 1(b), and FIG. 1(c) and FIG. 2(a), FIG. 2(b), and FIG. 2(c), an example in which the foldable screen is the flexible foldable screen is used to describe the foldable screen in this embodiment of this application. In addition, in the following embodiments of this application, an example in which the foldable screen is the flexible foldable screen is also used to describe the method provided in embodiments of this application.

For example, the electronic device 100 in this embodiment of this application can be a device including the foregoing foldable screen, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific type of the electronic device is not specifically limited in this embodiment of this application.

The following describes, with reference to the accompanying drawings, several support modes in which the foldable screen is in a half-folded form in embodiments of this application.

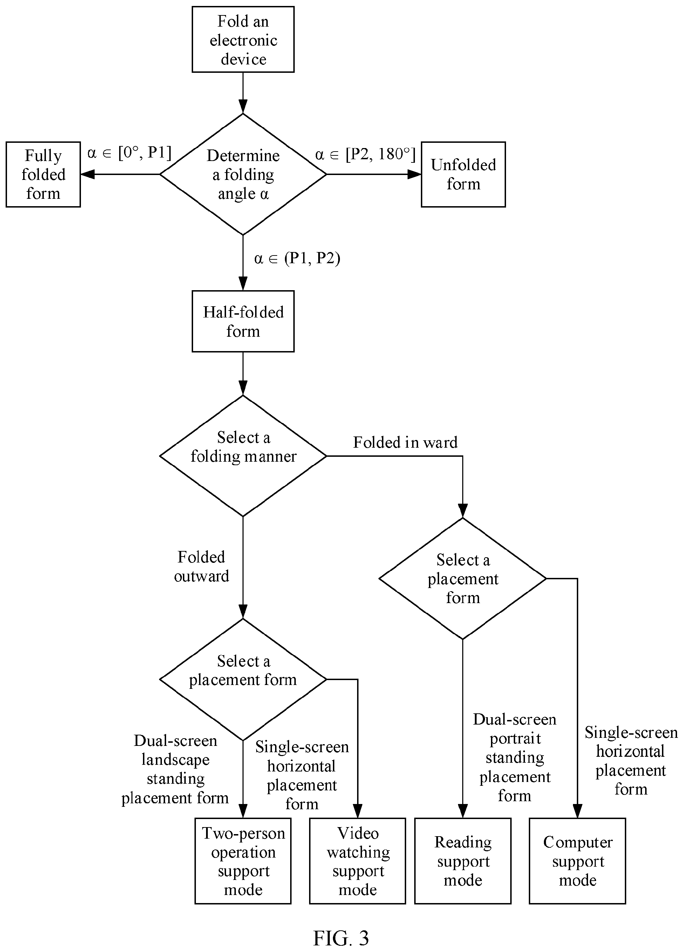

FIG. 3 is a flowchart in which an electronic device 100 identifies a support mode of a foldable screen according to an embodiment of this application.

As shown in FIG. 3, a procedure in which the electronic device 100 identifies the support mode of the foldable screen can be as follows:

1. The electronic device 100 receives a folding operation of a user, and the electronic device 100 calculates a folding angle (that is, an included angle between a first screen and a second screen) $\alpha$ of the foldable screen in response to the folding operation of the user.

When the electronic device 100 determines that the folding angle $\alpha$ of the foldable screen belongs to [0, P1], the electronic device 100 determines that the foldable screen is in a fully folded form (for example, as shown in FIG. 1(c) or FIG. 2(c)).

When the electronic device 100 determines that the folding angle $\alpha$ of the foldable screen belongs to [P2, 180°], the electronic device 100 determines that the foldable screen is in an unfolded form (for example, as shown in FIG. 1(a) or FIG. 2(a)).

When the electronic device 100 determines that the folding angle $\alpha$ of the foldable screen belongs to (P1, P2), the electronic device 100 determines that the foldable screen is in a half-folded form (for example, as shown in FIG. 1(b) or FIG. 2(b)). Herein, 0° < P1 < P2 < 180°.

For a process in which the electronic device 100 calculates the folding angle $\alpha$ of the foldable screen, refer to the following embodiment. Details are not described herein.

2. After the electronic device 100 determines that the foldable screen is in the half-folded form, the electronic device 100 may further determine whether the foldable screen is folded outward (as shown in FIG. 1(b)) or is folded inward (as shown in FIG. 2(b)).

3. After the electronic device 100 determines that the foldable screen is in the half-folded form and is folded outward, the electronic device 100 may determine whether a placement form of the electronic device 100 is a dual-screen landscape standing placement form or a single-screen horizontal placement form.

When the electronic device 100 is folded outward to be in the half-folded form and is in the dual-screen landscape standing placement form, the electronic device 100 may determine that the electronic device 100 is in a two-person operation support mode.

When the electronic device 100 is folded outward to be in the half-folded form and is in the single-screen horizontal placement form, the electronic device 100 may determine that the electronic device 100 is in a movie watching support mode.

4. After the electronic device 100 determines that the foldable screen is in the half-folded form and is folded inward, the electronic device 100 may determine whether a placement form of the electronic device 100 is a dual-screen portrait standing placement form or a single-screen horizontal placement form.

When the electronic device 100 is folded inward to be in the half-folded form and is in the dual-screen portrait standing placement form, the electronic device 100 may determine that the electronic device 100 is in a reading support mode.

When the electronic device 100 is folded inward to be in the half-folded form and is in the single-screen horizontal placement form, the electronic device 100 may determine that the electronic device 100 is in a computer support mode.

The following describes four support modes (also referred to as placement postures) of the electronic device 100 in the half-folded form in detail in this embodiment of this application.

1. Two-person operation support mode (that is, a first placement posture)

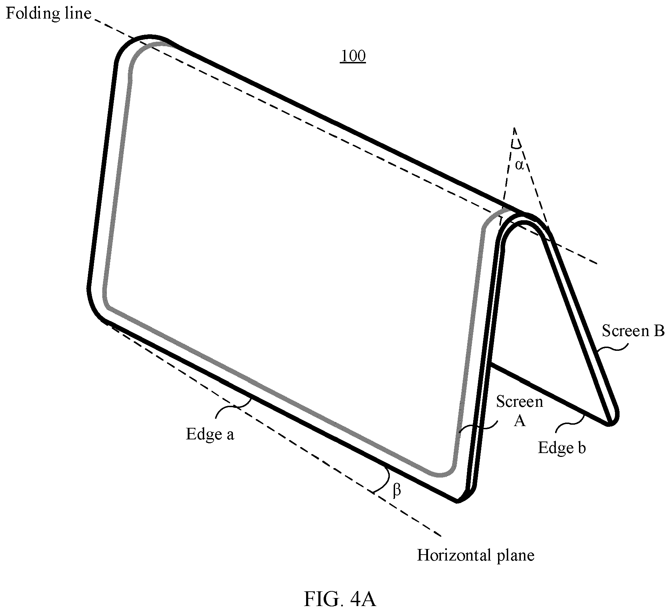

As shown in FIG. 4A, when an edge a and an edge b of the electronic device 100 are in contact with a material object, and an angle β formed between a horizontal plane and each of the edge a and the edge b belongs to [0, P3], the electronic device 100 determines that the electronic device 100 is in a dual-screen landscape standing placement form. Herein, 0° < P3 ≤ 30°, the edge a is an outer edge that is of a screen A of the electronic device 100 and that is parallel to a folding line, and the edge b is an outer edge that is of a screen B of the electronic device 100 and that is parallel to the folding line.

Therefore, in this embodiment of this application, when the electronic device 100 is in the two-person operation support mode (that is, the first placement posture), a foldable screen of the electronic device 100 is folded outward to form the screen A (that is, a first screen) and the screen B (that is, a second screen), and an included angle α between the screen A and the screen B belongs to (P1, P2), where 0° < P1 < P2 < 180°. In addition, the edge a and the edge b of the electronic device 100 are in contact with the material object, and the included angle β formed between the horizontal plane and each of the edge a and the edge b belongs to [0, P3]. Preferably, 0° < P3 ≤ 30°.

2. Video watching support mode (that is, a second placement posture)

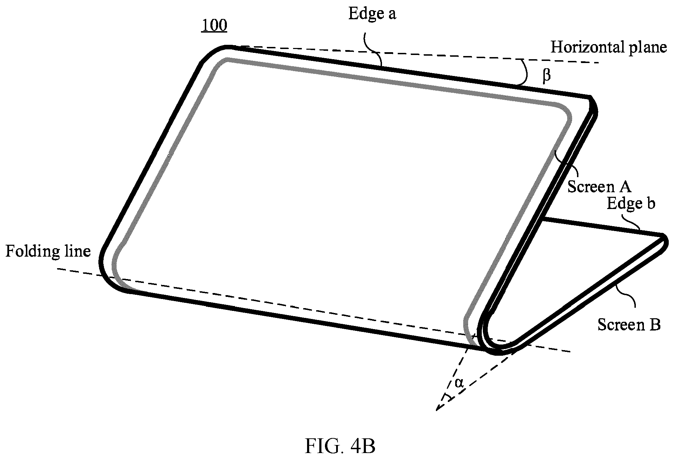

As shown in FIG. 4B, when a screen A or a screen B of the electronic device 100 is in contact with a material object, and an angle β formed between a horizontal plane and each of an edge a and an edge b belongs to [0, P3], the electronic device 100 determines that the electronic device 100 is in a single-screen horizontal placement form. Herein, 0° < P3 ≤30°, the edge a is an outer edge that is of the electronic device 100, that is on a side of the screen A, and that is parallel to a folding line, and the edge b is an outer edge that is of the electronic device 100, that is on a side of the screen B, and that is parallel to the folding line.

Therefore, in this embodiment of this application, when the electronic device 100 is in the movie watching support mode (that is, the second placement posture), a foldable screen of the electronic device 100 is folded outward to form the screen A (that is, a first screen) and the screen B (that is, a second screen), and a folding angle α between the screen A and the screen B belongs to (P1, P2), where 0° < P1 < P2 < 180°. In addition, a display surface of the screen B of the electronic device 100 is in contact with the material object, and the included angle β between the horizontal plane and each of the edge a (that is, a first side edge) and the edge b (that is, a second side edge) belongs to [0, P3]. Preferably, 0° < P3 ≤ 30°.

3. Reading support mode (that is, a third placement posture)

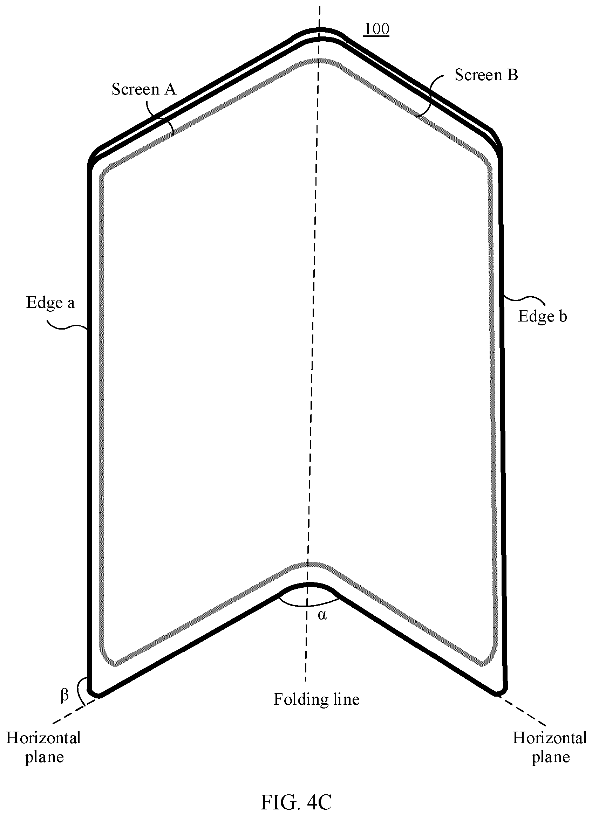

As shown in FIG. 4C, when an included angle β formed between a horizontal plane and each of an edge a and an edge b of the electronic device 100 belongs to [P4, 90°], the electronic device 100 determines that the electronic device 100 is in a dual-screen portrait standing placement form. Herein, 60° ≤ P4 <90°, the edge a is an outer edge that is of a screen A of the electronic device 100 and that is parallel to a folding line, and the edge b is an outer edge that is of a screen B of the electronic device 100 and that is parallel to the folding line.

Therefore, in this embodiment of this application, when the electronic device 100 is in the reading support mode (that is, the third placement posture), a foldable screen of the electronic device 100 is folded inward to form the screen A (that is, a first screen) and the screen B (that is, a second screen), and a folding angle $\alpha$ between the screen A and the screen B belongs to (P1, P2), where $0° < P1 < P2 < 180°$. In addition, the included angle $\beta$ between the horizontal plane and each of the edge a (that is, a first side edge) and the edge b (that is, a second side edge) of the electronic device 100 belongs to [P4, 90°]. Preferably, $60° \leq P4 < 90°$.

4. Computer support mode (that is, a fourth placement posture)

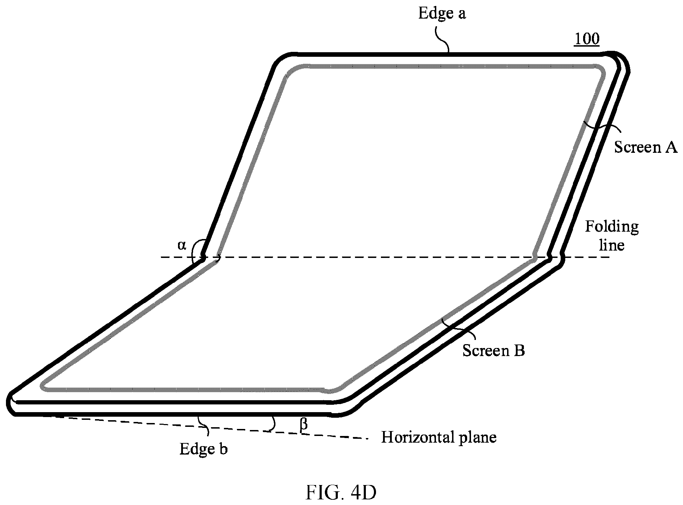

As shown in FIG. 4D, when a back side of a screen B of the electronic device 100 is in contact with a material object, and an included angle $\beta$ formed between a horizontal plane and each of an edge a and an edge b belongs to [0, P3], the electronic device 100 determines that the electronic device 100 is in a single-screen horizontal placement form. Herein, $0° < P3 \leq 30°$, the edge a is an outer edge that is of a screen A of the electronic device 100 and that is parallel to a folding line, and the edge b is an outer edge that is of the screen B of the electronic device 100 and that is parallel to the folding line.

Therefore, in this embodiment of this application, when the electronic device 100 is in the computer support mode (that is, the fourth placement posture), a foldable screen of the electronic device 100 is folded inward to form the screen A (that is, a first screen) and the screen B (that is, a second screen), and a folding angle $\alpha$ between the screen A and the screen B belongs to (P1, P2), where $0° < P1 < P2 < 180°$. In addition, the back side of the screen B (that is, the second screen) of the electronic device 100 is in contact with the material object, and the included angle $\beta$ formed between the horizontal plane and each of the edge a (that is, a first side edge) and the edge b (that is, a second side edge) belongs to [0, P3]. Preferably, $0° < P3 \leq 30°$.

The following describes, with reference to the accompanying drawings, the electronic device 100 provided in embodiments of this application.

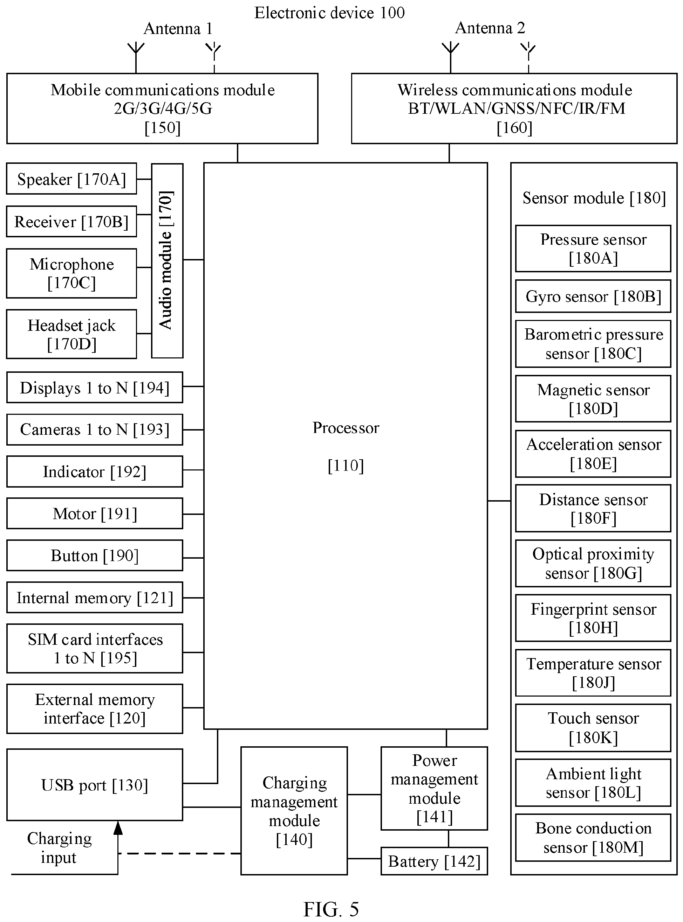

FIG. 5 is a schematic diagram of a structure of an electronic device 100.

The electronic device 100 is used as an example below to describe embodiments in detail. It should be understood that the electronic device 100 shown in FIG. 5 is merely an example, and the electronic device 100 may have more or fewer components than those shown in FIG. 5, or may combine two or more components, or may have different component configurations. The components shown in FIG. 5 can be implemented in hardware, software, or a combination of hardware and software including one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure can be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units can be independent devices, or can be integrated into one or more processors.

The controller can be a nerve center and a command center of the electronic device 100. The controller may generate an operation control signal based on an instruction operation code and a time sequence signal, to complete control of instruction fetching and instruction execution.

A memory can be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 can be separately coupled to the touch sensor 180K, a charger, a flash, the camera 193, and the like through different I2C bus interfaces. For example, the processor 110 can be coupled to the touch sensor 180K through the I2C interface, so that the processor 110 communicates with the touch sensor 180K through the I2C bus interface, to implement a touch function of the electronic device 100.

The I2S interface can be used for audio communication. In some embodiments, the processor 110 may include a plurality of groups of I2S buses. The processor 110 can be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be used for audio communication, and analog signal sampling, quantization, and coding. In some embodiments, the audio module 170 can be coupled to the wireless communications module 160 through a PCM bus interface. In some embodiments, the audio module 170 may alternatively transmit an audio signal to the wireless communications module 160 through the PCM interface, to implement a function of answering a call by using a Bluetooth headset. Both the I2S interface and the PCM interface can be used for audio communication.

The UART interface is a universal serial data bus, and is used for asynchronous communication. The bus can be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface can be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface can be configured by software. The GPIO interface can be configured as a control signal or a data signal. In some embodiments, the GPIO interface can be configured to connect the processor 110 to the camera 193, the display 194, the wireless communications module 160, the audio module 170, the sensor module 180, and the like. The GPIO interface may also be configured as the I2C interface, the I2S interface, the UART interface, the MIPI interface, or the like.

The USB port 130 is a port that conforms to a USB standard specification, and can be specifically a mini USB port, a micro USB port, a USB Type-C port, or the like. The USB port 130 can be configured to connect to a charger to charge the electronic device 100, or can be configured to transmit data between the electronic device 100 and a peripheral device, or can be configured to connect to a headset, to play audio through the headset. The port can be further configured to connect to another electronic device such as an AR device.

It can be understood that an interface connection relationship between the modules that is shown in this embodiment of the present invention is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger can be a wireless charger or a wired charger. In some embodiments of wired charging, the charging management module 140 may receive a charging input of the wired charger through the USB port 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 can be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 can be implemented through the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the electronic device 100 can be configured to cover one or more communication frequency bands. Different antennas can be further multiplexed to improve antenna utilization. For example, the antenna 1 can be multiplexed as a diversity antenna in a wireless local area network. In some other embodiments, an antenna can be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 can be disposed in the processor 110. In some embodiments, at least some functional modules of the mobile communications module 150 can be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, and the like), or displays an image or a video on the display 194. In some embodiments, the modem processor can be an independent component. In some other embodiments, the modem processor can be independent of the processor 110, and is disposed in a same device as the mobile communications module 150 or another functional module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communications module 160 can be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 is the outward foldable screen or the inward foldable screen.

The display 194 includes a display panel. The display panel can be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini LED, a micro LED, a micro OLED, a quantum dot light-emitting diode (quantum dot light emitting diode, QLED), or the like. In some embodiments, the electronic device 100 may include one or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP can be disposed in the camera 193.

The camera 193 is configured to capture a static image or a video. An optical image of an object is generated through the lens, and is projected onto the photosensitive element. The photosensitive element can be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to: compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100, for example, image recognition, facial recognition, speech recognition, and text understanding, can be implemented through the NPU.

The external memory interface 120 can be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 can be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 can be further configured to: code and decode an audio signal. In some embodiments, the audio module 170 can be disposed in the processor 110, or some functional modules of the audio module 170 are disposed in the processor 110. The speaker 170A, also referred to as a "loudspeaker", is configured to convert an audio electrical signal into a sound signal. The electronic device 100 can be used to listen to music or answer a call in a hands-free mode over the speaker 170A. The receiver 170B, also referred to as an "earpiece", is configured to convert an electrical audio signal into a sound signal. When a call is answered or speech information is received through the electronic device 100, the receiver 170B can be put close to a human ear to listen to a voice. The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. At least one microphone 170C can be disposed in the electronic device 100. In some other embodiments, two microphones 170C can be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D can be the USB port 130, or can be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A can be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to a first pressure threshold is performed on a Messages application icon, an instruction for creating a new SMS message is executed.

The gyro sensor 180B can be configured to determine a motion posture of the electronic device 100. In some embodiments, an angular velocity of the electronic device 100 around three axes (that is, axes x, y, and z) can be determined by using the gyro sensor 180B. The gyro sensor 180B can be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in navigation and motion sensing game scenarios.

In this embodiment of this application, the display 194 of the electronic device 100 can be folded to form a plurality of screens. A gyro sensor 180B can be disposed in each of the plurality of screens, and is configured to measure an orientation (that is, a direction vector of the orientation) of the corresponding screen. The electronic device 100 may determine an included angle between adjacent screens (for example, an included angle between a screen A and a screen B) based on an angle change of the orientation that is of each screen and that is measured by the gyro sensor 180B.

It should be noted that in this embodiment of this application, a foldable screen (for example, the display 194) of the electronic device 100 can be folded to form a plurality of screens. Each includes a gyro sensor (for example, the gyro 180B), configured to measure an orientation (that is, a direction vector of the orientation) of the corresponding screen. For example, with reference to FIG. 1(a), FIG. 1(b), and FIG. 1(c), the display 194 of the electronic device 100 can be folded to form a screen A (that is, a first screen) and a screen B (that is, a second screen). In this case, both the screen A and the screen B include gyro sensors 180B, configured to respectively measure orientations of the screen A and the screen B. The electronic device 100 determines an included angle between adjacent screens and a relationship between each screen and a horizontal plane based on an angular change of the measured orientation of each screen.

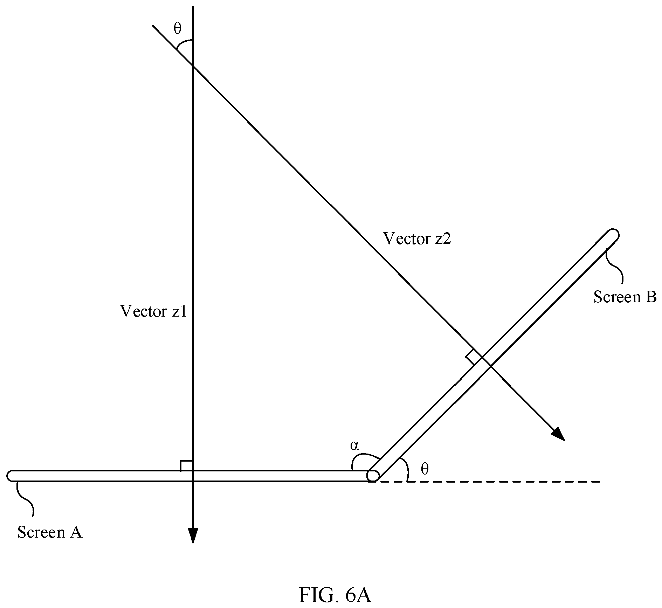

For example, the foldable screen of the electronic device 100 can be folded to form a screen A and a screen B shown in FIG. 6A. A gyro sensor A is disposed on the screen A, and a gyro sensor B is disposed on the screen B. A principle in which the gyro sensor A measures an orientation (that is, a direction vector of the orientation) of the screen A and the gyro sensor B measures an orientation (that is, a direction vector of the orientation) of the screen B, and a principle in which the electronic device 100 calculates an included angle $\alpha$ between the screen A and the screen B based on the orientation of the screen A and the orientation of the screen B are described herein in this embodiment of this application.

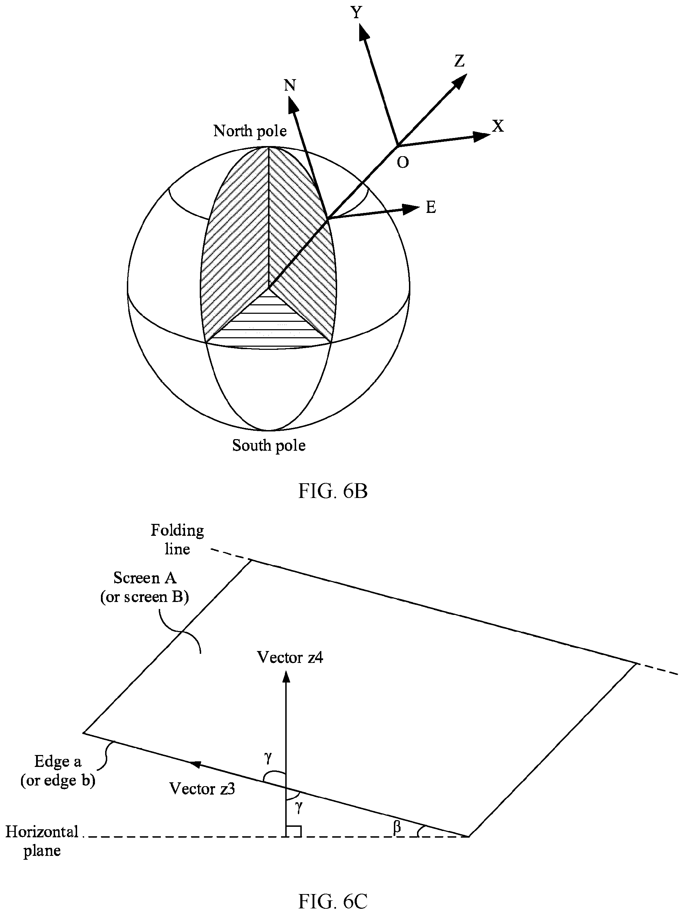

A coordinate system of the gyro sensor is a geographic coordinate system. As shown in FIG. 6B, in the geographic coordinate system, an origin O is located at a point at which a carrier (that is, a device including the gyro sensor, for example, the electronic device 100) is located, an axis x points to the east (E) along a local latitude line, an axis y points to the north (N) along a local meridian line, and an axis z points upward along a local geographic perpendicular line and forms a right-hand rectangular coordinate system together with the axis x and the axis y. A plane formed by the axis x and the axis y is a local horizontal plane, and a plane formed by the axis y and the axis z is a local meridian plane. Therefore, it can be understood that a coordinate system of the gyro sensor is as follows: using the gyro sensor as the origin O, using a direction pointing to the east along the local latitude line as the axis x, using a direction pointing to the north along the local meridian line as the axis y, and using a direction pointing upward along the local geographical perpendicular line (that is, in a reverse direction of the geographical perpendicular line) as the axis z.

The electronic device 100 may measure, by using the gyro sensor disposed on each screen, a direction vector of an orientation of each screen in a coordinate system of the gyro sensor disposed on each screen. For example, refer to a side view of the electronic device 100 shown in FIG. 6A. The electronic device 100 learns, through measurement, that the direction vector of the orientation of the screen A in a coordinate system of the gyro sensor A is a vector z1, and the direction vector of the orientation of the screen B in a coordinate system of the gyro sensor B is a vector z2. The electronic device 100 may calculate an included angle $\theta$ between the vector z1 and the vector z2 by using Formula (1):

$$\theta = \text{arc} \ \cos\left(\frac{\vec{z1}\cdot\vec{z2}}{\left|\vec{z1}\right|\times\left|\vec{z2}\right|}\right) \qquad \text{Formula (1)}$$

It can also be learned from FIG. 6A that, because the vector z1 is perpendicular to the screen A and the vector z2 is perpendicular to the screen B, the included angle $\alpha$ between the screen A and the screen B can be obtained: $\alpha$ =180° - $\theta$. In other words, the electronic device 100 may determine the included angle $\alpha$ between the screen A and the screen B based on the measured direction vector (that is, the vector z1) of the orientation of the screen A in the coordinate system of the gyro sensor A and the measured direction vector (that is, the vector z2) of the orientation of the screen B in the coordinate system of the gyro sensor B.

It should be noted that, although locations of the gyro sensors disposed on the screen A and the screen B do not overlap, that is, origins of the coordinate systems of the gyro sensors on the screen A and the screen B do not overlap, axes x, axes y, and axes z in the two coordinate systems are parallel. Therefore, it can be considered that the coordinate systems of the gyro sensors disposed on the screen A and the screen B are parallel. In this way, although the vector z1 and the vector z2 are not in a same coordinate system, the included angle $\theta$ between the vector z1 and the vector z2 may still be calculated by using Formula (1) because axes in the two coordinate systems are parallel.

In some embodiments, the included angle $\alpha$ between the screen A and the screen B may alternatively be measured through cooperation with one or more other sensors. For example, one acceleration sensor can be disposed on each screen of the foldable screen. The electronic device 100 (for example, the processor 110) may measure, by using the acceleration sensor, a motion acceleration when each screen is rotated; and then calculate, based on the measured motion acceleration, an angle at which one screen rotates relative to another screen, that is, the included angle $\alpha$ between the screen A and the screen B.

In some other embodiments, the gyro sensor can be a virtual gyro sensor formed by cooperating with a plurality of other sensors. The virtual gyro sensor can be configured to calculate an included angle between adjacent screens of the foldable screen, that is, the included angle $\alpha$ between the screen A and the screen B.

In some embodiments of this application, the electronic device 100 further measures an included angle $\beta$ between an edge a of the screen A (or an edge b of the screen B) and a horizontal plane by using the gyro 180B. For descriptions of the edge a and the edge b, refer to the embodiments shown in FIG. 4A to FIG. 4D. Details are not described herein again.

For example, the foldable screen of the electronic device 100 can be folded (outward or inward) to form the screen A and the screen B. The electronic device 100 may learn, through measurement by using the gyro sensor disposed on each screen, that a direction vector of the edge a of the screen A (or the edge b of the screen B) in a coordinate system of the gyro sensor disposed on the screen is a vector, where the edge a is parallel to the edge b. For example, FIG. 6C is a schematic diagram of a location relationship between the screen A of the electronic device 100 and the horizontal plane. The electronic device 100 may learn, through measurement, that a direction vector of the edge a of the screen A in the coordinate system of the gyro sensor A is a vector z3, and a direction vector of a normal line of the horizontal plane in the coordinate system of the gyro sensor A is a vector z4. Therefore, the electronic device 100 may calculate an included angle $\gamma$ between the vector z3 and the vector z4 by using Formula (2):

$$\gamma = \text{arc } \cos \left| \frac{\vec{z3} \cdot \vec{z4}}{|\vec{z3}| \times |\vec{z4}|} \right| \qquad \text{Formula (2)}$$

It can also be learned from FIG. 6A that, because the vector z4 is perpendicular to the horizontal plane, the included angle $\beta$ between the screen A and the screen B can be obtained: $\beta = 90° - \gamma$. To be specific, the electronic device 100 may determine the included angle $\beta$ between the edge a and the horizontal plane based on the measured direction vector of the edge a of the electronic device 100 and the measured normal vector of the horizontal plane. Because the edge a and the edge b of the electronic device 100 are parallel, both the included angle between the edge a and the horizontal plane and the included angle between the edge b and the horizontal plane are equal to $\beta$. Similarly, the electronic device 100 may determine the included angle $\beta$ between the edge b and the horizontal plane based on the measured direction vector of the edge b of the electronic device 100 and the measured normal vector of the horizontal plane.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity can be detected. The acceleration sensor 180E can be further configured to identify a posture of the electronic device, and is used in applications such as switching between landscape mode and portrait mode and a pedometer. It should be noted that, in this embodiment of this application, the display 194 of the electronic device 100 can be folded to form a plurality of screens. Each screen may include an acceleration sensor 180E, configured to measure an orientation (that is, a direction vector of the orientation) of the corresponding screen.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include a light-emitting diode (LED) and an optical detector, for example, a photodiode. The light-emitting diode can be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking. It should be noted that, in this embodiment of this application, the optical proximity sensor 180F can be disposed at locations such as a screen A, a screen B, an edge a, and an edge b of the electronic device 100, a back side of the screen A of the electronic device 100, and a back side of the screen B of the electronic device 100. In some embodiments of this application, the optical proximity sensor 180F can be configured to detect whether the screen A, the screen B, the edge a, the edge b, the back side of the screen A, and the back side of the screen B of the electronic device 100 each are in contact with a material object.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application access locking, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K can be disposed on the display 194, and the touch sensor 180K and the display 194 form a touchscreen. The touch sensor 180K is configured to detect a touch operation performed on or near the touch sensor. The touch sensor may transfer the detected touch operation to the application processor to determine a type of a touch event. A visual output related to the touch operation can be provided through the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 can be a mechanical button, or can be a touch button. The electronic device 100 may receive a key input, and generate a key signal input related to user settings and function control of the electronic device 100.

The motor 191 may generate a vibration prompt. The motor 191 can be configured to produce an incoming call vibration prompt and a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect can be further customized.

The indicator 192 can be an indicator light, and can be configured to indicate a charging status and a power change, or can be configured to indicate a message, a missed call, a notification, and the like.

The SIM card interface 195 is configured to connect to a SIM card. The SIM card can be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards can be simultaneously inserted into a same SIM card interface 195. The plurality of cards can be of a same type or of different types. The SIM card interface 195 is compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, that is, an embedded SIM card. The eSIM card can be embedded into the electronic device 100, and cannot be separated from the electronic device 100.

All methods in the following embodiments can be implemented on the electronic device 100 having the foregoing hardware structure.

A software system of the electronic device 100 may use a layered architecture, an event-driven architecture, a microkernel architecture, a micro service architecture, or a cloud architecture. In this embodiment of the present invention, a system of the layered architecture is used as an example to describe a software structure of the electronic device 100.

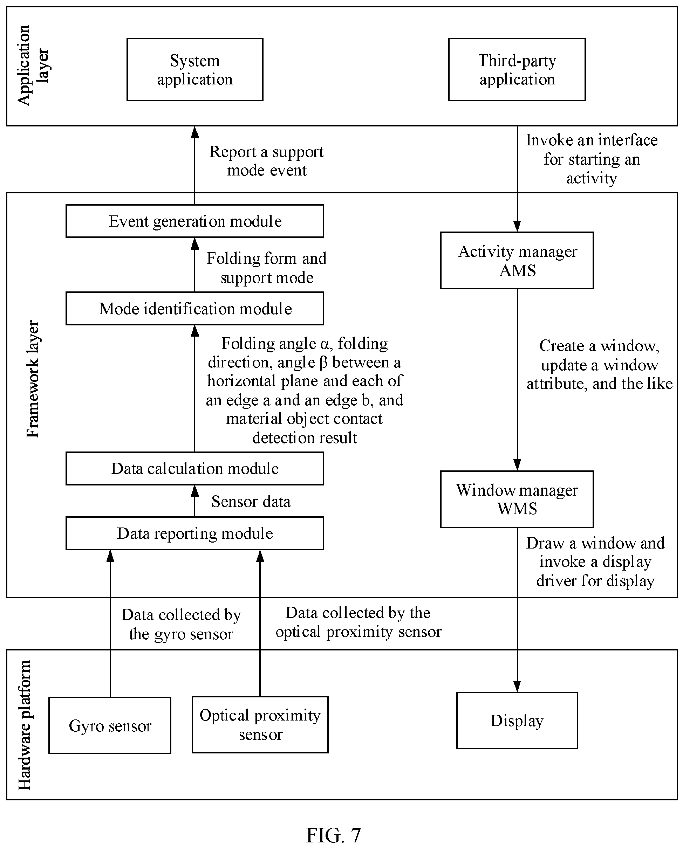

FIG. 7 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer (application layer), an application framework layer (briefly referred to as a framework layer), a kernel layer (also referred to as a driver layer), and a hardware platform from top to bottom.

The application layer may include a series of application packages. As shown in FIG. 7, the application layer may include system applications and a third-party application. The system applications at the application layer may include applications of a plurality of systems. For example, a first operating system and a second operating system can be configured in the electronic device 100. When the electronic device 100 is in a fully folded form or an unfolded form, the electronic device 100 may run only the first operating system. When the electronic device 100 runs the first operating system and determines that a foldable screen of the electronic device 100 is in a two-person operation support mode in a half-folded form, the electronic device 100 may start the second operating system while running the first operating system. The example is merely used to explain this application, and shall not constitute a limitation.

The application layer may include a series of application packages. As shown in FIG. 7, the application layer may include a plurality of application packages such as a system application and a third-party application. For example, the application packages may include applications such as Camera, Gallery, Calendar, Phone, Map, Navigation, WLAN, Bluetooth, Music, Videos, Messages, and Launcher (launcher).

The framework layer provides an application programming interface (application programming interface, API) and a programming framework for an application at the application layer. The application framework layer includes some predefined functions. As shown in FIG. 7, the framework layer may include an event generation module, a mode identification module, a data calculation module, a data reporting module, an activity manager (Window manager service, WMS), an activity manager (activity manager service, AMS), and the like. Optionally, the framework layer may further include a content provider, a view system, a phone manager, a resource manager, a notification manager, and the like (which are not shown in the figure).

The window manager WMS is configured to manage a window program. The window manager may obtain a size of the display, determine whether there is a status bar, perform screen locking, take a screenshot, and the like. The activity manager AMS is configured to manage activities, and is responsible for work such as startup, switching, and scheduling of each component in the system, and management and scheduling of the application programs.

The driver layer (not shown in the figure) is a layer between the hardware platform and the framework layer. The kernel layer may include a display driver, an input/output device driver (for example, a keyboard, a touchscreen, a headset, a speaker, or a microphone), a camera driver, an audio driver, a sensor driver, and the like.

The hardware platform may include a gyro sensor, an optical proximity sensor, a display, and the like. For the sensors included in the hardware platform, refer to the schematic diagram of the hardware structure of the electronic device 100 shown in FIG. 5.

A user performs an input operation (for example, a folding operation on the foldable screen) on the electronic device 100. The hardware platform may report, to the data reporting module at the framework layer, sensor data collected by sensors such as the gyro sensor and the optical proximity sensor. The data reporting module reports the sensor data to the data calculation module. The data module calculation module may calculate a folding angle $\alpha$, a folding direction, an angle $\beta$ between a horizontal plane and each of an edge a and an edge b, a material object detection result, and the like of the foldable screen of the electronic device 100 based on the sensor data, and report the information to the mode identification module. The mode identification module may determine a current folding form and a current support mode of the foldable screen based on the folding angle $\alpha$, the folding direction, the angle $\beta$ between the horizontal plane and each of the edge a and the edge b, the material object detection result, and the like that are reported by the data calculation module. For a manner in which the mode identification module identifies the support mode of the foldable screen, refer to the embodiment shown in FIG. 3. Details are not described herein again. After identifying the folding form and the support mode of the foldable screen, the mode identification module may report the folding form and the support mode to the event generation module. The event generation module may report a support mode event to the application layer. The system application or the third-party application at the application layer may invoke an interface for starting an activity, and the activity manager AMS sets a support mode (for example, a two-person operation support mode, a movie watching support mode, a reading support mode, or a computer support mode) of an application, a location and a size of an application display window in the support mode, and the like. The window server WMS at the framework layer draws a window based on settings of the AMS, and then sends window data to the display driver (not shown in the figure) at the kernel layer, and the display driver displays a corresponding application interface on the foldable screen.

For example, that the activity manager AMS requests the window manager WMS to draw the window and invokes the interface displayed by the display driver can be: When the foldable screen is in a two-person operation support mode in a half-folded form, home screens of different systems are respectively displayed on the screen A and the screen B, or home screens of different accounts are respectively displayed on the screen A and the screen B. The example is merely used to explain this application, and shall not constitute a limitation.

An embodiment of this application provides a display method for a foldable screen, applied to an electronic device including a foldable screen. The foldable screen can be folded to form a first screen and a second screen. When the foldable screen is in a half-folded form, the electronic device may control displayed content on the first screen and the second screen based on a location relationship between a horizontal plane and each of the first screen and the second screen. In this way, it can be convenient for a user to interact with the electronic device without holding the electronic device stably, to improve user interaction experience.

The following describes, in detail with reference to application scenarios, the display method for a foldable screen when the electronic device 100 is in a two-person operation support mode in this application.

In some application scenarios, when the electronic device 100 changes from an unfolded form, a fully folded form, or another support mode in a half-folded form to a two-person operation support mode (which can be referred to as a first placement posture) in the half-folded form, the electronic device 100 runs two operating systems, display a second interface on a first screen, and display a third interface on a second screen. The second interface runs on a first operating system, and the second interface runs on a second operating system. For example, respective home screens or application interfaces of the two operating systems can be respectively displayed on the first screen and the second screen of the foldable screen. In this way, a plurality of users can simultaneously use one electronic device without affecting each other.

When the foldable screen is in the folded form, the electronic device 100 may use the screen A as a primary screen to display a home screen or an application interface of the first operating system of the electronic device 100, and the screen B can be black. Alternatively, the electronic device 100 may use the screen B as a primary screen to display a home screen or an application interface of the first operating system of the electronic device 100, and the screen A can be black.

When the foldable screen is in the unfolded form, the electronic device 100 may display, on the foldable screen in full screen mode, a home screen or an application interface of the first operating system of the electronic device 100.

When the foldable screen of the electronic device 100 is in the fully folded form, an included angle (that is, a folding angle) $\alpha$ between the screen A and the screen B of the electronic device 100 belongs to [0, P1]. When the foldable screen is in the unfolded form, an included angle (that is, a folding angle) $\alpha$ between the screen A and the screen B of the electronic device 100 belongs to [P2, 180°]. Herein, P2 can be referred to as a first angle threshold, and P1 can be referred to as a second angle threshold.

When the electronic device 100 is in the two-person operation support mode (that is, the first placement posture), the foldable screen is folded outward, an included angle between the first screen and a horizontal plane is between a third angle threshold and a fourth angle threshold, and an included angle between the second screen and the horizontal plane is between the third angle threshold and the fourth angle threshold, where the third angle threshold is greater than the third angle threshold, and the third angle threshold is less than the fourth angle threshold.

In a possible implementation, when the electronic device is in the two-person operation support mode (that is, the first placement posture), the foldable screen of the electronic device 100 is folded outward to form the screen A (that is, the first screen) and the screen B (that is, the second screen), and the included angle $\alpha$ between the screen A and the screen B belongs to (P1, P2), where 0° < P1 < P2 < 180°. In addition, an edge a and an edge b of the electronic device 100 are in contact with a material object, and an included angle $\beta$ formed between the horizontal plane and each of the edge a and the edge b belongs to [0, P3]. Preferably, 0° < P3 ≤ 30°.

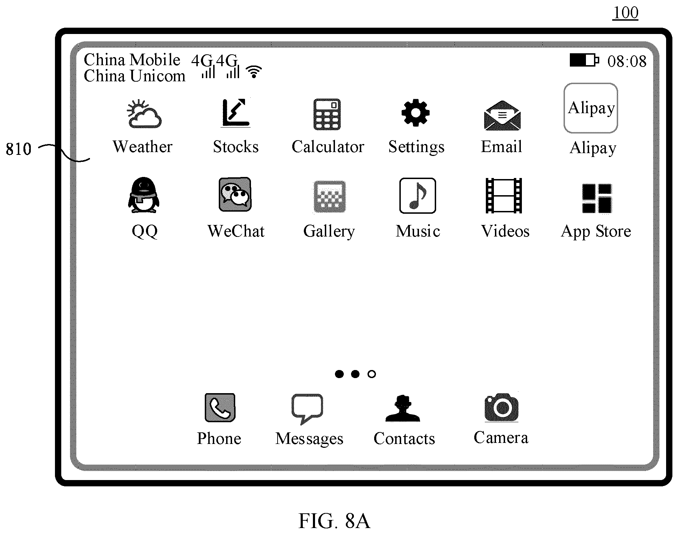

For example, as shown in FIG. 8A, when a foldable screen of the electronic device 100 is in an unfolded form, the electronic device 100 may display a home screen 810 of a first operating system on the foldable screen in full screen mode. The home screen 810 displays a page on which application icons are placed, and the page includes a plurality of application icons (for example, a Weather application icon, a Stocks application icon, a Calculator application icon, a Settings application icon, an Email application icon, an Alipay application icon, a QQ application icon, a WeChat application icon, a Gallery application icon, a Music application icon, a Videos application icon, and an App Store application icon). A page indicator is further displayed below the plurality of application icons, to indicate a location relationship between the currently displayed page and another page. There are a plurality of tray icons (for example, a Phone application icon, a Messages application icon, a Contacts application icon, and a Camera application icon) below the page indicator, and the tray icons remain displayed during page switching. In some embodiments, the page may alternatively include a plurality of application icons and a page indicator. The page indicator may not be a part of the page, and may exist independently. The tray icons are also optional. This is not limited in this embodiment of this application. A status bar is displayed in an upper part of the home screen 810. The status bar may include one or more signal strength indicators of a mobile communications signal (which may also be referred to as a cellular signal), a battery status indicator, a time indicator, and the like. After the terminal enables a Bluetooth function, the status bar may further display a Bluetooth enabling indicator.

When the electronic device 100 detects that the foldable screen changes from an unfolded form to a two-person operation support mode in a half-folded form, the electronic device 100 may display a home screen or an application interface of a first operating system on a screen A, and display a home screen or an application interface of a second operating system on a screen B.

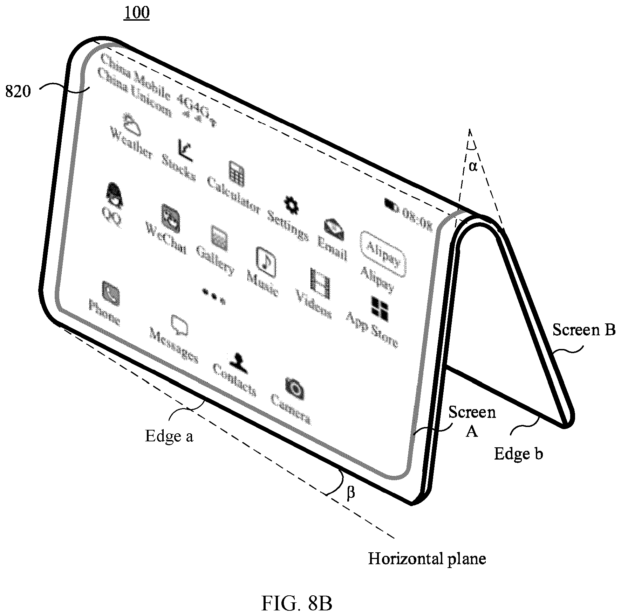

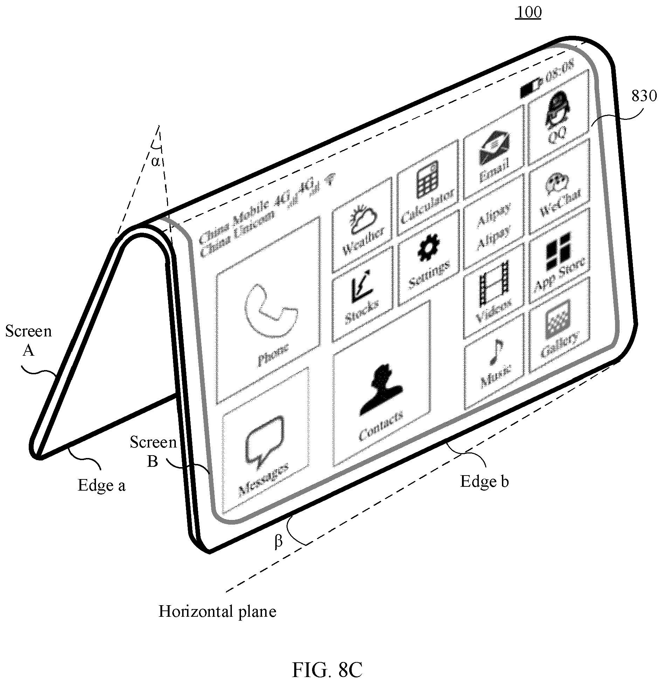

For example, as shown in FIG. 8B and FIG. 8C, the electronic device 100 changes from an unfolded form to a two-person operation support mode in a half-folded form. When the electronic device 100 is in the two-person operation support mode in the half-folded form, the electronic device 100 may display a home screen 820 of the first operating system on the screen A, and display a home screen 830 of the second operating system on the screen B. In the unfolded form, the electronic device 100 displays the home screen 810 of the first operating system on the foldable screen in full screen mode. Therefore, displayed content on the home screen 820 shown in FIG. 8B is the same as displayed content on the home screen 810 shown in FIG. 8A, but display sizes are different.

As shown in FIG. 8C, the electronic device 100 displays the home screen 820 of the second operating system on the screen B. The home screen 820 of the secondary system may display one or more application icons (for example, a Phone application icon, a Messages application icon, a Weather application icon, a Calculator application icon, a Stocks application icon, a Settings application icon, an Email application icon, a QQ application icon, a WeChat application icon, a Contacts application icon, a Videos application icon, an App Store application icon, a Music application icon, and a Gallery application icon). Displayed content on the home screen 820 of the second operating system is different from displayed content on the home screen 810 of the second operating system shown in FIG. 8B.

The first operating system and the second operating system may run independently on the electronic device 100, and the first operating system and the second operating system can be respectively stored in two isolated storage spaces of the electronic device 100. For example, the first operating system can be stored in a storage space A of the electronic device 100, and the second operating system can be stored in a storage space B of the electronic device 100. The storage space A and the storage space B are isolated from each other.

Application data generated when the electronic device 100 runs the first operating system and application data generated when the electronic device 100 runs the second operating system are respectively stored in two isolated storage spaces of the electronic device 100. For example, the application data generated when the electronic device 100 runs the first operating system can be stored in a storage space C, and the application data generated when the electronic device 100 runs the first operating system can be stored in a storage space D. The storage space C and the storage space D are isolated from each other.

In a possible implementation, the electronic device 100 may include a plurality of application processors (APs). When the electronic device 100 is in an unfolded form or a fully folded form, the electronic device 100 may run the first operating system by using a first application processor. When the electronic device 100 identifies a multi-person operation mode in a folded form, a first application processor of the electronic device 100 may send a start instruction to a second application processor, to indicate the second application processor to start and run the second operating system.

In a possible implementation, the electronic device 100 may include a multi-core (core) application processor, and the multi-core application processor may simultaneously and independently run the first operating system and the second operating system. When the electronic device 100 is in an unfolded form or a fully folded form, the electronic device 100 may run the first operating system by using the multi-core application processor. When the electronic device 100 is in a two-person operation mode in a half-folded form, the electronic device 100 may simultaneously and independently run the first operating system and the second operating system by using the multi-core application processor.

The first operating system and the second operating system are respectively stored in two independent storage spaces. Application data generated when the electronic device 100 runs the first operating system and application data generated when the electronic device 100 runs the secondary operating system are respectively stored in two independent storage spaces.

In a possible implementation, a login password can be set for the second operating system of the electronic device 100. The user password can be a letter password, a gesture password, a fingerprint password, a face password, or the like. When the electronic device 100 changes to a two-person operation mode in a half-folded form, the electronic device 100 may first display a password input interface of the second operating system on the screen B. The electronic device 100 may receive a password (for example, a character string, a gesture pattern, fingerprint information, or face information) entered by a user, and determine whether the password entered by the user is the login password of the second operating system. When the password entered by the user is the same as the login password of the second operating system, the electronic device 100 may display a home screen of the second operating system on the screen B (for example, the home screen 830 displayed on the screen B in FIG. 8C).

In a possible implementation, when the electronic device 100 changes from the two-person operation support mode in the half-folded form to an unfolded form, the electronic device 100 may display, on the foldable screen in the unfolded form in full screen mode, the home screen or the application interface previously displayed on the screen A. For example, when the electronic device 100 is in the two-person operation mode in the half-folded form, the electronic device may display a home screen (for example, the home screen 820 shown in FIG. 8B) of the first operating system on the screen A, and display a home screen (for example, the home screen 830 shown in FIG. 8C) of the second operating system on the screen B. When the electronic device 100 changes to the unfolded form, the electronic device 100 may display an interface (for example, the home screen 810 shown in FIG. 8A, where the displayed content on the home screen 810 is the same as the displayed content on the home screen 820) of the first operating system on the foldable screen in the unfolded form in full screen mode, and stop running the second operating system.

In a possible implementation, when the electronic device 100 changes from the two-person operation mode in the half-folded form to a fully folded form, the electronic device 100 may stop running the second operating system, display a fourth interface on the screen A, and turn off the screen B.

In some application scenarios, when the electronic device 100 changes from another form (for example, a fully folded form or an unfolded form) or another support mode in a same form to a two-person operation support mode (which can be referred to as a first placement posture) in a half-folded form, the electronic device 100 may enter a multi-user mode, and display a home screen or an application interface of each user account on each of the screen A (which can be referred to as a first screen) and the screen B (which can be referred to as a second screen) of the foldable screen. In this way, a plurality of users can simultaneously use one electronic device without affecting each other.

The user account is an account used to log in to an operating system of the electronic device 100. Each user account corresponds to one storage space, and user data corresponding to user accounts is stored in respective storage spaces and is isolated from each other. An unlock password can be set for each user account. After the unlock password is set for the user account, when the electronic device 100 enables the user account, the electronic device 100 needs to verify whether a password entered by a user is the same as the unlock password of the user account. If the password entered by the user is the same as the unlock password of the user account, the electronic device 100 may display a home screen or an application interface corresponding to the user account.

For example, when the foldable screen of the electronic device 100 is in an unfolded form, the electronic device 100 may display a home screen (for example, the home screen 810 shown in FIG. 8A) of a user account A on the foldable screen in full screen mode.

When the electronic device 100 detects that the foldable screen changes from the unfolded form to a two-person operation support mode in a half-folded form, the foldable screen of the electronic device 100 can be divided into a screen A and a screen B; and the electronic device 100 may display a home screen or an application interface of the user account A on the screen A, and display an account selection interface on the screen B.

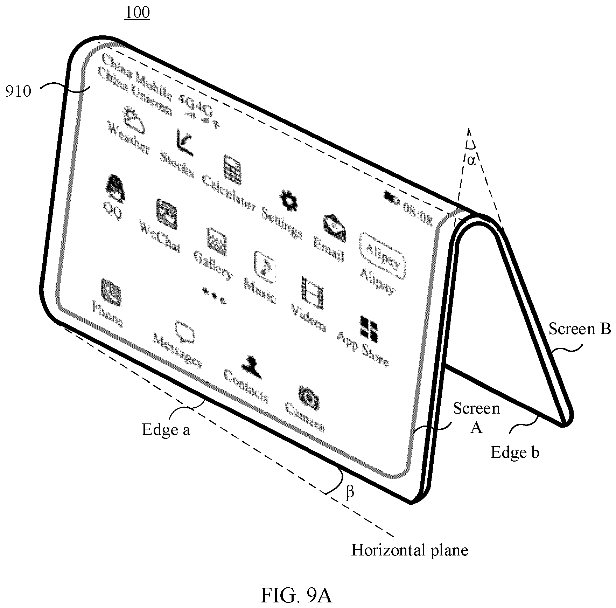

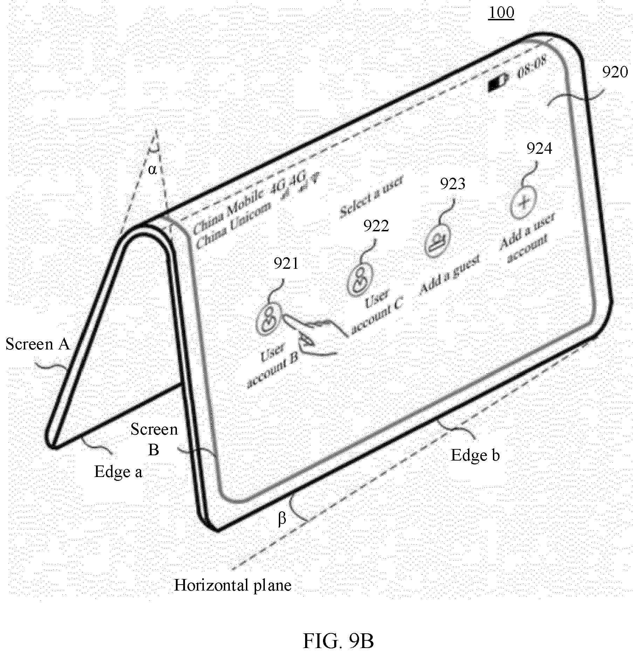

For example, as shown in FIG. 9A and FIG. 9B, the electronic device 100 changes from an unfolded form to a two-person operation support mode in a folded form. When the electronic device 100 is in the two-person operation mode in the folded form, the electronic device 100 may display a home screen 910 of a user account A on the screen A, and display an account selection interface 920 on the screen B. In the unfolded form, the electronic device 100 displays the home screen (for example, the home screen 810 shown in FIG. 8A) of the user account A on the foldable screen in full screen mode. Therefore, displayed content on the home screen 910 shown in FIG. 9A is the same as interface content on the home screen displayed by the electronic device 100 in the unfolded form, but display sizes are different.

As shown in FIG. 9B, the electronic device 100 displays the account selection interface 920 on the screen B. The account selection interface 920 may include one or more account options (for example, an account option 921 and an account option 922). The account option 921 can be used to trigger the electronic device 100 to display a home screen or an application interface of a user account B on the screen B. The account option 922 can be used to trigger the electronic device 100 to display a home screen or an application interface of a user account C on the screen B. In a possible implementation, the electronic device 100 may further include a guest adding option 923, an account adding option 924, and the like. The guest adding option 923 can be used to trigger the electronic device 100 to enable a temporary account for use by the user. An account password may not be set for the temporary account. When the electronic device 100 exits the temporary account, the electronic device 100 may initialize application data of the temporary account. The account adding option 924 can be used to trigger the electronic device 100 to add a new user account, and set an account password and configure a corresponding storage space for the new user account.

The electronic device 100 may receive an input operation (for example, tapping) performed by the user on the account option 921, and the electronic device 100 may display, on the screen B in response to the operation, a system unlocking interface corresponding to the user account B.

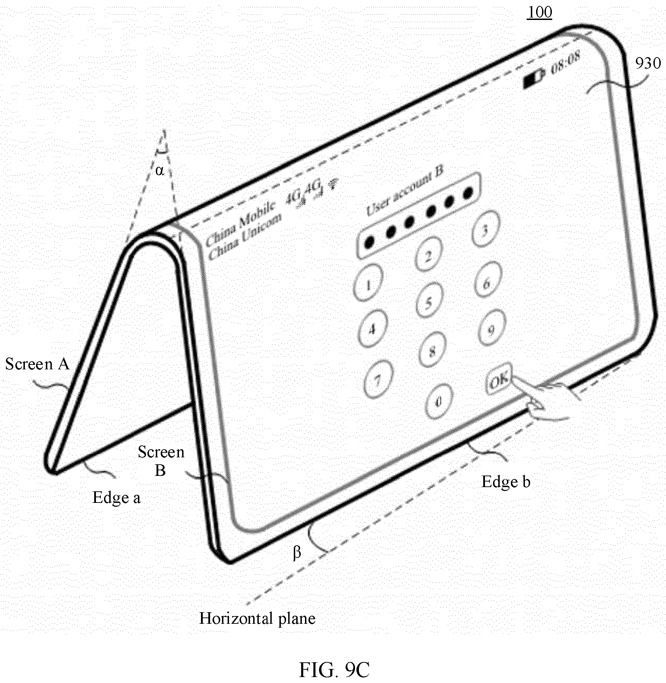

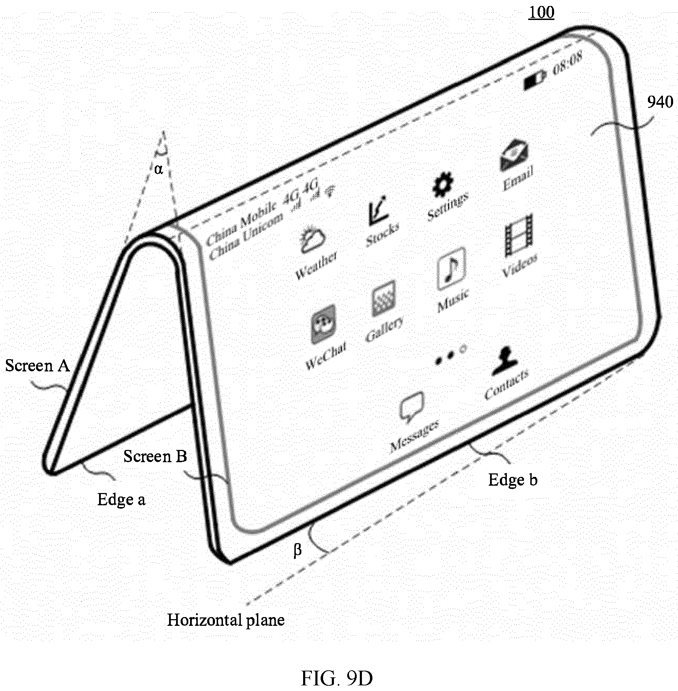

For example, as shown in FIG. 9C, the electronic device 100 may display a system unlocking interface 930 of the user account B on the screen B in response to the input operation performed by the user on the account option 921. The system unlocking interface 930 is used to trigger the user to unlock and enter a home screen corresponding to the user account B. The system unlocking interface 930 may include a password input window. After the user enters an unlock password corresponding to the user account B, the electronic device 100 may display, on the screen B, a home screen 940 corresponding to the user account B shown in FIG. 9D.

As shown in FIG. 9D, the electronic device 100 displays, on the screen B, the home screen 940 corresponding to the user account B. The home screen 940 may display one or more application icons (for example, a Weather application icon, a Stocks application icon, a Settings application icon, an Email application icon, a WeChat application icon, a Gallery application icon, a Music application icon, and a Videos application icon).

The foregoing unlocking manner is not limited to character password unlocking, or can be gesture password unlocking, fingerprint unlocking, face unlocking, or the like.

In a possible implementation, no unlock password is set for the user account B. The electronic device 100 may display, on the screen B in response to an input operation performed by the user on an option (for example, the option 921 in the account selection interface 920 shown in FIG. 9B) corresponding to the user account B, a home screen (for example, the home screen 940 displayed on the screen B in FIG. 9D) corresponding to the user account B.

In a possible implementation, when the electronic device 100 changes from a two-person operation mode (that is, a first placement posture) in a half-folded form to an unfolded form, the electronic device 100 may display, on the foldable screen in the unfolded form in full screen mode, the home screen or the application interface that corresponds to the user account A and that is previously displayed on the screen A.

In a possible implementation, when the electronic device 100 changes from a two-person operation mode in a half-folded form to an unfolded form, the electronic device 100 may continue to display, on the screen A, the home screen or the application interface corresponding to the user account A, and turn off the screen B. Alternatively, the electronic device 100 may display, on the screen B, the home screen or the application interface that corresponds to the user account A and that is previously displayed on the screen A, and turn off the screen A.

In some application scenarios, when the foldable screen of the electronic device 100 changes from a fully folded form or an unfolded form to a two-person operation support mode (that is, a first placement posture) in a half-folded form, the electronic device 100 may respectively display interfaces of different applications on the screen A (which can be referred to as a first screen) and the screen B (which can be referred to as a second screen) of the foldable screen. In this way, a plurality of users can simultaneously use different applications on one electronic device, to provide convenience for the users.

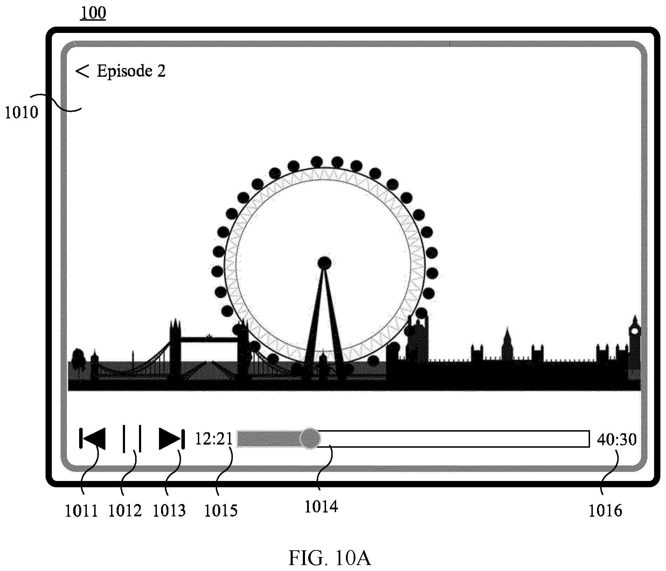

For example, as shown in FIG. 10A, when a foldable screen of the electronic device 100 is in an unfolded form, the electronic device 100 may display an application interface (for example, a video application interface 1010) of an application A on the foldable screen in full screen mode. The video application interface 1010 may display a video playback image 1015, a previous episode switching control 1011, a pause/play control 1012, a next episode switching control 1013, a playback progress bar 1014, and the like.

When the electronic device 100 detects that the foldable screen changes from the unfolded form to a two-person operation support mode in a half-folded form, the electronic device 100 may display the application interface of the application A on a screen A, and display an application selection interface on a screen B. The application selection interface includes icons of one or more applications.

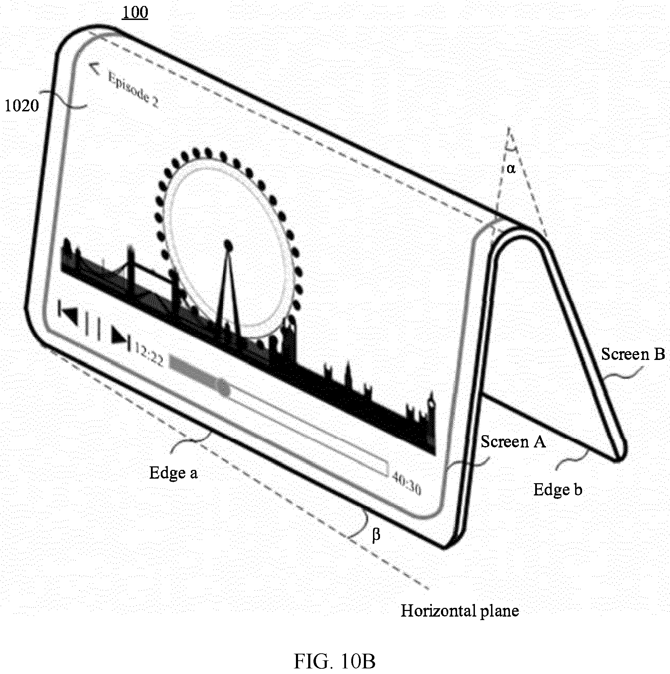

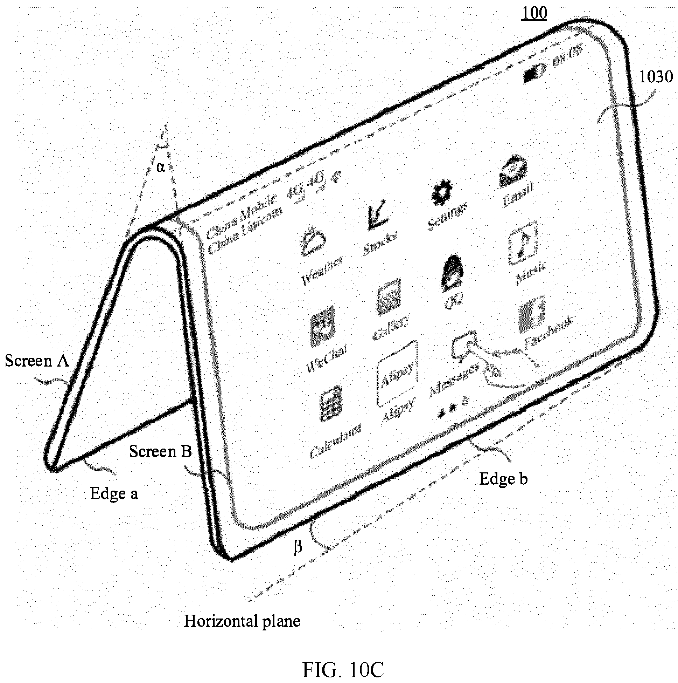

For example, as shown in FIG. 10B and FIG. 10C, the electronic device 100 changes from an unfolded form to a two-person operation support mode in a folded form. When the electronic device 100 is in the two-person operation support mode in the folded form, the electronic device 100 may display an application interface (for example, a video application interface 1020) of an application A on a screen A, and display an application selection interface 1030 on a screen B. Displayed content in the video application interface 1020 shown in FIG. 10B is the same as displayed content in the video application interface 1010 shown in FIG. 10A, but display sizes are different.

As shown in FIG. 10C, the electronic device 100 displays an application selection interface 1030 on the screen B. The application selection interface 1030 may display one or more application icons (for example, a Weather application icon, a Stocks application icon, a Settings application icon, an Email application icon, a WeChat application icon, a Gallery application icon, a QQ application icon, a Music application icon, a Calculator application icon, an Alipay application icon, a Messages application icon 1031, and a Facebook application icon).

After the electronic device 100 displays the application selection interface on the screen B, the electronic device 100 may receive a selection operation (for example, tapping) performed by the user on an icon corresponding to an application B in the application selection interface, and the electronic device 100 may display, on the screen B in response to the operation, an application interface corresponding to the application B.

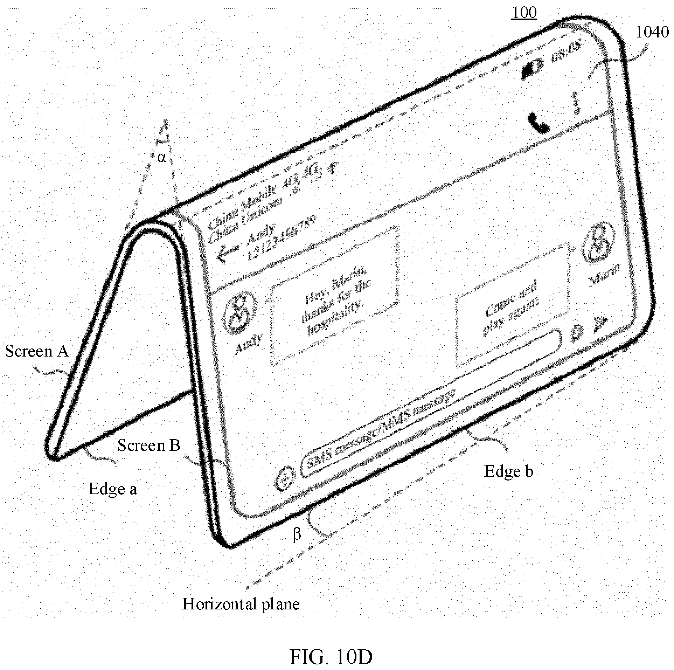

For example, the application B can be a Messages application. The electronic device 100 may display, on the screen B in response to an input operation performed by the user on a Messages application icon 1031, a Messages application interface 1040 shown in FIG. 10D. As shown in FIG. 10D, the Messages application interface 1040 includes contact information 1041 (for example, a contact name "Andy" and a contact phone number "12123456789"), an SMS message dialog box 1042, an SMS message input box 1043, an SMS message sending control 1044, and the like.

In some application scenarios, when the foldable screen of the electronic device 100 changes from a fully folded form, an unfolded form, or another support mode in a half-folded form to a two-person operation support mode (which can be referred to as a first placement posture) in the half-folded form, the electronic device 100 may simultaneously display a same application interface on the screen A (which can be referred to as a first screen) and the screen B (which can be referred to as a second screen) of the foldable screen. In this way, a plurality of users can simultaneously use a same application on one electronic device, to improve user experience.

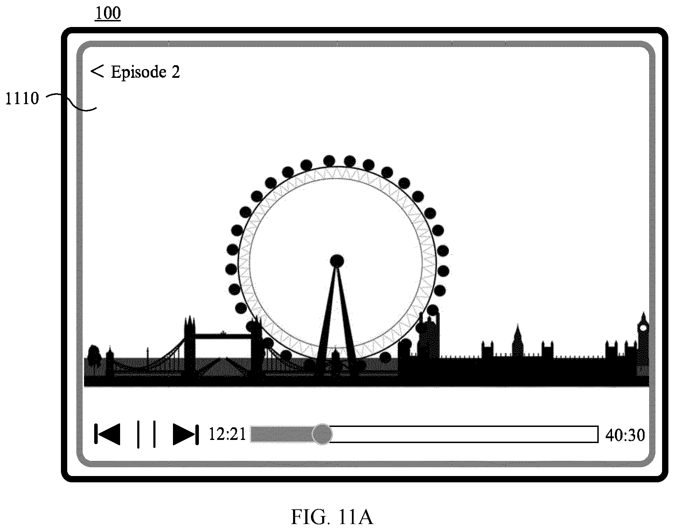

For example, as shown in FIG. 11A, when a foldable screen of the electronic device 100 is in an unfolded form, the electronic device 100 may display an application interface (for example, a video application interface 1110) of an application A on the foldable screen in full screen mode. The video application interface 1110 is the same as the video application interface 1010 shown in FIG. 10A. Therefore, for text descriptions of the video application interface 1110, refer to the embodiment shown in FIG. 10A. Details are not described herein again.

When the electronic device 100 detects that the foldable screen changes from the unfolded form to a two-person operation support mode in a half-folded form, the electronic device 100 may display the application interface of the application A on both the screen A and the screen B.

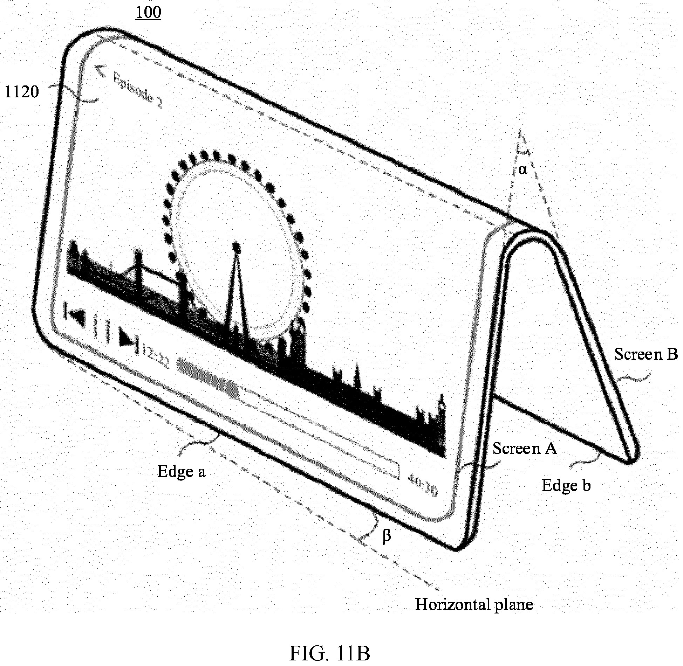

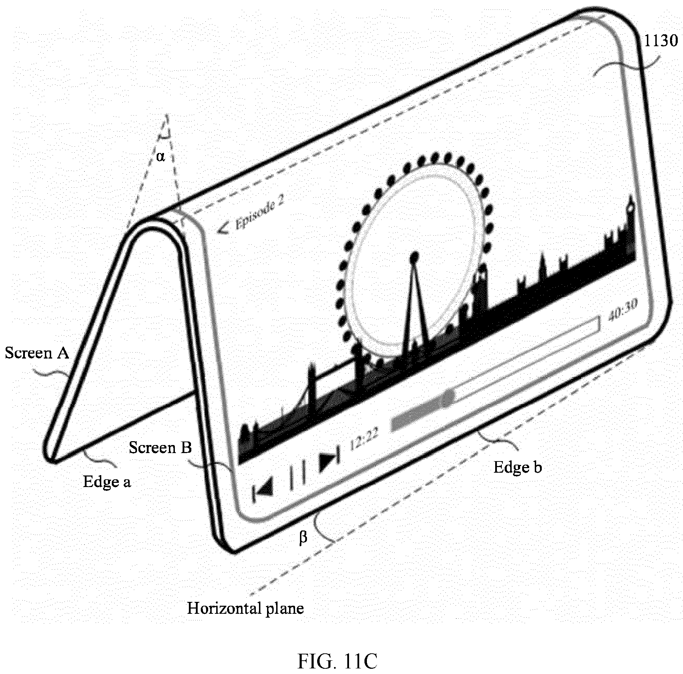

For example, as shown in FIG. 11B and FIG. 11C, the electronic device 100 changes from an unfolded form to a two-person operation support mode in a half-folded form. When the electronic device 100 is in the two-person operation support mode in the half-folded form, the electronic device 100 may display the application interface of the application A on both the screen A and the screen B. For example, a video application interface 1120 is displayed on screen A, and a video application interface 1130 is displayed on screen B. Displayed content in the video application interface 1120 is the same as displayed content in the video application interface 1130. The displayed content in the video application interface 1120 (or the video application interface 1130) is the same as displayed content in the video application interface 1110 shown in FIG. 11A, but display sizes are different.

In a possible implementation, when the foldable screen of the electronic device 100 changes from an unfolded form, a fully folded form, or another support mode in a half-folded form to a two-person operation support mode in the half-folded form, the electronic device 100 may display different application interfaces of a same application on the screen A and the screen B. For example, when the electronic device 100 is in the two-person operation mode in the half-folded form, and the electronic device 100 opens a game application, the electronic device 100 may respectively display two different game interfaces of the same game application on the screen A and the screen B. In this way, two users may simultaneously operate the electronic device 100 on the screen A and the screen B, to perform game interaction.

The following describes, in detail with reference to application scenarios, the display method for a foldable screen when the electronic device 100 is in a movie watching support mode (that is, a second placement posture) in this application.

When the foldable screen of the electronic device 100 is in a fully folded form, an included angle (that is, a folding angle) $\alpha$ between the screen A and the screen B of the electronic device 100 belongs to [0, P1]. When the foldable screen is in an unfolded form, an included angle (that is, a folding angle) $\alpha$ between the screen A and the screen B of the electronic device 100 belongs to [P2, 180°].

When the foldable screen is in a second placement posture, the foldable screen is folded outward, and an included angle between the second screen and a horizontal plane is less than a fifth angle threshold. For example, the fifth angle threshold can be 15 degrees.

In a possible implementation, when the electronic device 100 is in the movie watching support mode (that is, the second placement posture), the foldable screen of the electronic device 100 is folded outward to form a screen A (that is, a first screen) and a screen B (that is, a second screen), and a folding angle $\alpha$ between

the screen A and the screen B belongs to (P1, P2), where 0° < P1 < P2 < 180°. In addition, a display surface of the screen B of the electronic device 100 is in contact with a material object, and an included angle $\beta$ between a horizontal plane and each of an edge a (that is, a first side edge) and an edge b (that is, a second side edge) belongs to [0, P3]. Preferably, 0° < P3 ≤ 30°.

In some application scenarios, when the electronic device 100 changes from an unfolded form, a fully folded form, or another holder mode in a half-folded form to a movie watching support mode (that is, a second placement posture) in the half-folded form, the electronic device 100 may control the first screen to display a second interface, and control the second screen to be turned off, where the second interface may run on a first operating system. For example, the electronic device 100 may display displayed content (for example, a home screen or an application interface) on the screen A, and turn off the screen B. In this way, the electronic device 100 can be placed on an object by using the screen B as a support, and the mobile phone can be operated (for example, to watch a movie) on the screen A without using an auxiliary support, to improve user operation experience.

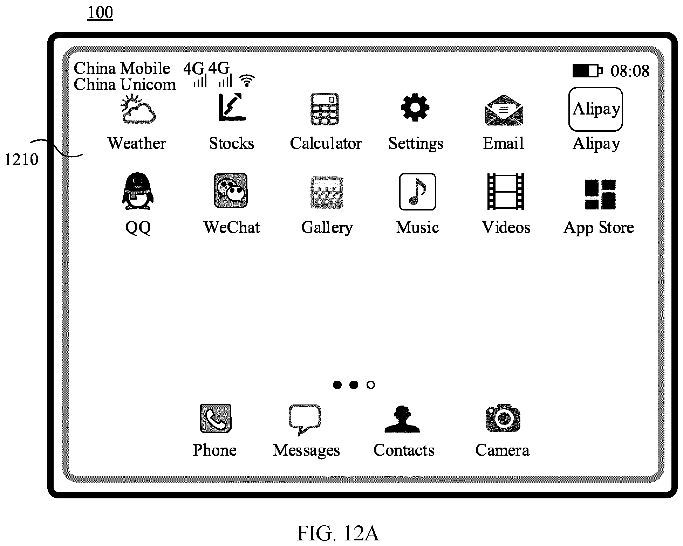

For example, as shown in FIG. 12A, when a foldable screen of the electronic device 100 is in an unfolded form, the electronic device 100 may display a home screen 1210 on the foldable screen in full screen mode. The home screen 1210 may include one or more application icons (for example, a Weather application icon, a Stocks application icon, a Calculator application icon, a Settings application icon, an Email application icon, an Alipay application icon, a QQ application icon, a WeChat application icon, a Gallery application icon, a Music application icon, a Videos application icon, and an App Store application icon). The home screen 1210 shown in FIG. 12A is the same as the home screen 810 shown in FIG. 8A. Therefore, the text descriptions of the home screen 810 shown in FIG. 8A is also applicable to the home screen 1210. Details are not described herein again.

When the electronic device 100 detects that the foldable screen changes from the unfolded form to a movie watching support mode in a half-folded form, the electronic device 100 may display, on the screen A, displayed content (for example, the home screen 1210 shown in FIG. 12A) on the foldable screen in the unfolded form, and turn off the screen B.

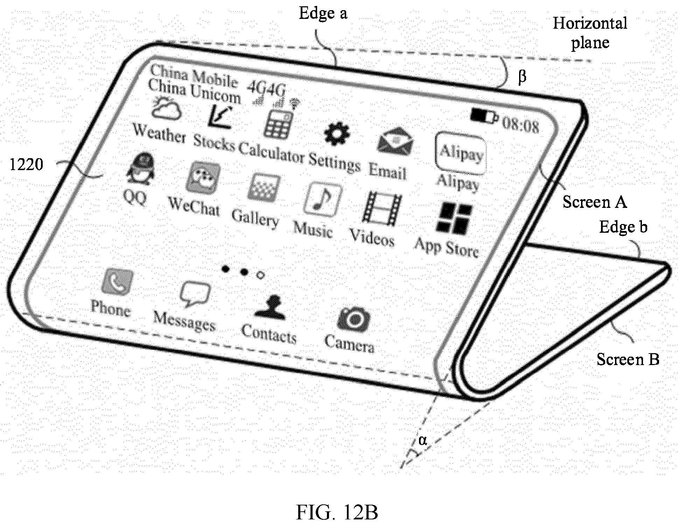

For example, as shown in FIG. 12B, the electronic device 100 changes from an unfolded form to a movie watching support mode in a half-folded form. When the electronic device 100 is in the movie watching support mode in the half-folded form, the electronic device 100 may display a home screen 1220 on the screen A, and turn off the screen B. The home screen 1220 displays one or more application icons (for example, a Phone application icon, a Messages application icon, a Weather application icon, a Calculator application icon, a Stocks application icon, a Settings application icon, an Email application icon, a QQ application icon, a WeChat application icon, a Contacts application icon, a Videos application icon, an App Store application icon, a Music application icon, and a Gallery application icon). Displayed content on the home screen 1220 is the same as displayed content on the home screen 1210 shown in FIG. 12A, but display sizes are different.

In a possible implementation, when the electronic device determines, based on a location relationship between a horizontal plane and each of the first screen and the second screen, that a placement posture of the foldable screen is a second placement posture, the electronic device may control the first screen to display the second interface, and control the second screen to be turned off. The second interface may include a function control, and the function control can be used to trigger a corresponding function.

For example, when the foldable screen of the electronic device 100 changes from an unfolded form, a fully folded form, or another support mode in a half-folded form to a movie watching support mode in the half-folded form, the electronic device 100 may display a mirror function prompt box on the screen A, to prompt a user to enable a mirror function of the electronic device 100. After the electronic device 100 receives an operation performed by the user to confirm to enable the mirror function, the electronic device 100 may open a front-facing camera on the screen A, and display, on the screen A, an image captured by the front-facing camera. In this way, the user may use the electronic device 100 as a comb mirror and does not need to hold the electronic device 100, so that the user can dress up conveniently.

For another example, when the foldable screen of the electronic device 100 changes from an unfolded form, a fully folded form, or another support mode in a half-folded form to a movie watching support mode in a half-folded form, the electronic device 100 may display a flash function prompt box on the screen A, to prompt a user to enable a flash function of the electronic device 100. After the electronic device 100 receives an operation performed by the user to confirm to enable the flash function, the electronic device 100 may change the screen A to a white screen or open a flash on a back side of the screen A. In this way, the electronic device 100 can be equivalent to a convenient desk lamp, and the user may adjust an illumination direction by changing an included angle between the screen A and the screen B, to improve user experience.

The following describes, in detail with reference to application scenarios, the display method for a foldable screen when the electronic device 100 is in a reading support mode (that is, a third placement posture) in this application.

When the foldable screen of the electronic device 100 is in a fully folded form, an included angle (that is, a folding angle) $\alpha$ between the screen A and the screen B of the electronic device 100 belongs to [0, P1]. When the foldable screen is in an unfolded form, an included angle (that is, a folding angle) $\alpha$ between the screen A and the screen B of the electronic device 100 belongs to [P2, 180°].

When the electronic device 100 is in a reading support mode (that is, a third placement posture), the foldable screen is folded inward, an included angle between the first screen and a horizontal plane is between a sixth angle threshold and a seventh angle threshold, and an included angle between the second screen and the horizontal plane is between the sixth angle threshold and the seventh angle threshold, where the sixth angle threshold is less than 90 degrees, and the seventh angle threshold is greater than 90 degrees. For example, the sixth angle threshold can be 75 degrees, and the seventh angle threshold can be 105 degrees.

In a possible implementation, when the electronic device 100 is in a reading support mode (that is, a third placement posture), the foldable screen of the electronic device 100 is folded inward to form a screen A (that is, a first screen) and a screen B (that is, a second screen), and a folding angle $\alpha$ between the screen A and the screen B belongs to (P1, P2), where 0° < P1 < P2 < 180°. In addition, an included angle $\beta$ between a horizontal plane and each of an edge a (that is, a first side edge) and an edge b (that is, a second side edge) of the electronic device 100 belongs to [P4, 90°]. Preferably, 60° ≤ P4 < 90°.

In some application scenarios, when the electronic device 100 is in a reading support mode (that is, a third placement posture) in a half-folded form, the electronic device 100 may control the first screen to display a second interface, and control running of the second screen to display a third interface, where the second interface may include a first part of displayed content in a first interface, and the third interface may include a second part of the displayed content in the first interface. For example, the electronic device 100 may divide the displayed content (for example, a web page in a browser or book content in an ebook) into two pages and respectively display the two pages on the screen A and the screen B. In this way, like a book, the electronic device 100 may display, on the screen A and the screen B, displayed content of a same application on pages, to improve user reading experience.

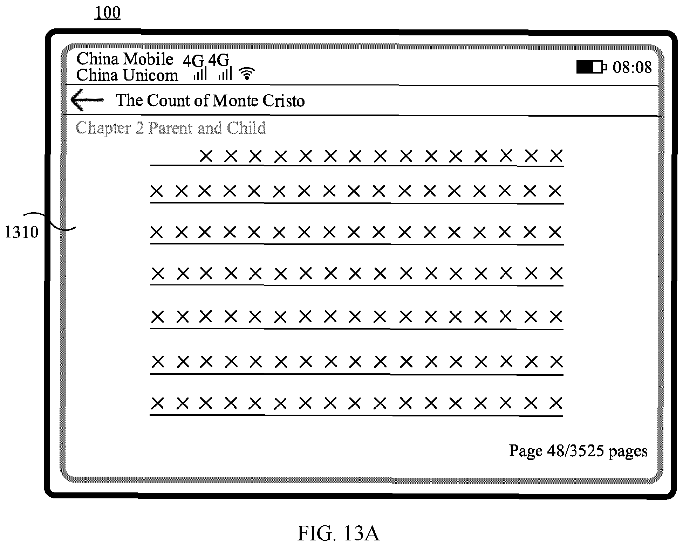

For example, as shown in FIG. 13A, when a foldable screen of the electronic device 100 is in an unfolded form, the electronic device 100 may display an ebook application interface 1310 on the foldable screen in full screen mode. The ebook application interface 1310 may display a reading page of an ebook, and the reading page displays text content in the ebook. For example, the reading page may display text content on Page 48 of the ebook "The Count of Monte Cristo" (3525 pages in total).

When the electronic device 100 detects that the foldable screen changes from the unfolded form shown in FIG. 13A to a reading support mode in a half-folded form, the electronic device 100 may divide the displayed content in the ebook application interface 1310 into two pages and respectively display the two pages on the screen A and the screen B.

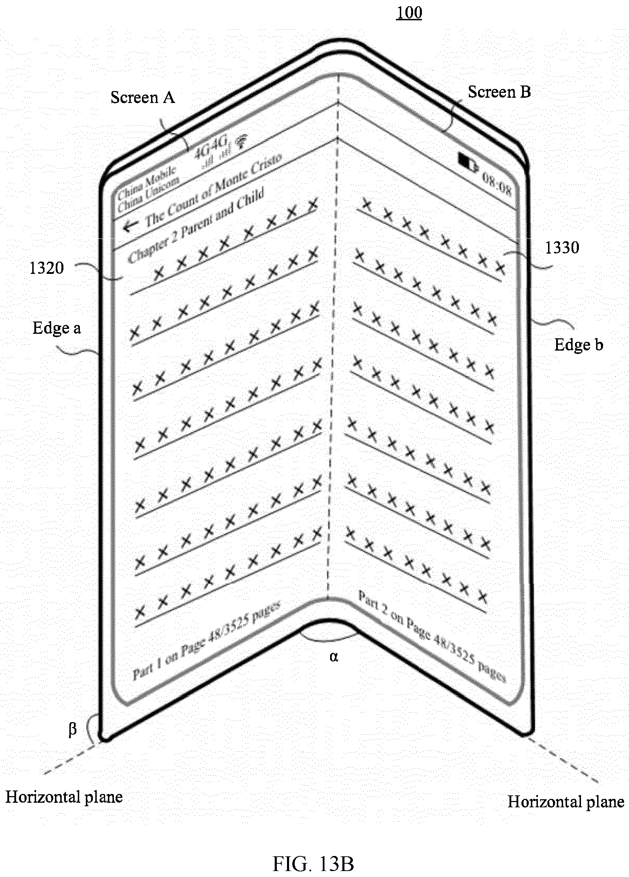

For example, as shown in FIG. 13B, the electronic device 100 changes from an unfolded form to a reading support mode in a half-folded form. When the electronic device 100 is in the reading support mode in the half-folded form, the electronic device 100 may divide the displayed content in the ebook application interface 1310 shown in FIG. 13A into two pages. For example, the electronic device 100 may divide text content on Page 48 of the ebook "The Count of Monte Cristo" (3525 pages in total) into two pages: Part 1 on Page 48 and Part 2 on Page 48. The electronic device 100 may display a page 1320 on the screen A, and display a page 1330 on the screen B. The page 1320 displayed on the screen A displays text content of Part 1 on Page 48, and the page 1330 displayed on the screen B displays text content of Part 2 on Page 48. The example is merely used to explain this application, and shall not constitute a limitation.

The following describes, in detail with reference to application scenarios, the display method for a foldable screen when the electronic device 100 is in a computer support mode (that is, a fourth placement posture) in this application.

When the foldable screen of the electronic device 100 is in a fully folded form, an included angle (that is, a folding angle) α between the screen A and the screen B of the electronic device 100 belongs to [0, P1]. When the foldable screen is in an unfolded form, an included angle (that is, a folding angle) α between the screen A and the screen B of the electronic device 100 belongs to [P2, 180°].

When the electronic device 100 is in a computer support mode (that is, a fourth placement posture), the foldable screen of the electronic device 100 is folded inward to form a screen A (that is, a first screen) and a screen B (that is, a second screen), and a folding angle α between the screen A and the screen B belongs to (P1, P2), where 0° < P1 < P2 < 180°. In addition, a back side of the screen B (that is, the second screen) of the electronic device 100 is in contact with a material object, and an included angle β formed between a horizontal plane and each of an edge a (that is, a first side edge) and an edge b (that is, a second side edge) belongs to [0, P3]. Preferably, 0° < P3 ≤ 30°.

In some application scenarios, after the foldable screen of the electronic device 100 changes from a fully folded form, an unfolded form, or another support mode in a half-folded form to a computer support mode (which can be referred to as a fourth placement posture) in the half-folded form, the electronic device 100 may control the first screen to display a second interface, determines an operation control corresponding to the second interface, and control running of the second screen to display a third interface, where the third interface includes the operation control corresponding to the second interface. For example, the electronic device 100 may display a home screen or an application interface on the screen A of the foldable screen, and display a virtual keyboard on the screen B. In this way, an input method can no longer occupy an application display interface, to provide convenience for a user.

When the foldable screen is in the fourth placement posture, the foldable screen is folded inward, an included angle between the first screen and the second screen is between a first angle threshold and a second angle threshold, and an included angle between the second screen and a horizontal plane is less than an eighth angle threshold. For example, the eighth angle threshold can be 15 degrees.

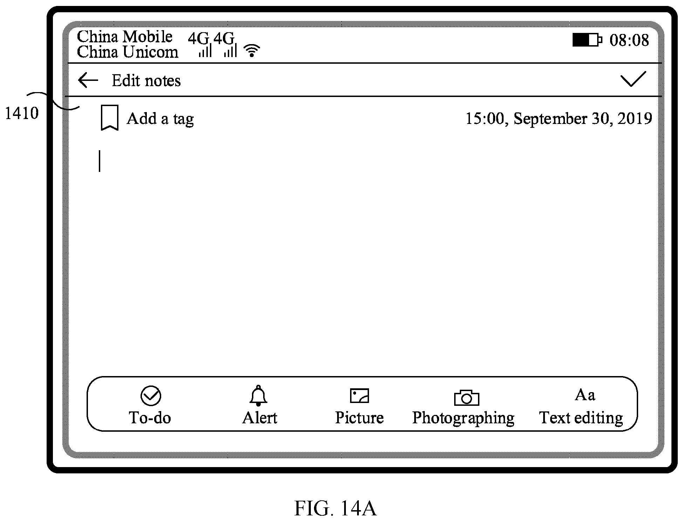

For example, as shown in FIG. 14A, when a foldable screen of the electronic device 100 is in an unfolded form, the electronic device 100 may display a note editing interface 1410 on the foldable screen in full screen mode. The note editing interface 1410 may display text information entered by a user.

When the electronic device 100 detects that the foldable screen changes from the unfolded form to a computer support mode in a half-folded form, the electronic device 100 may display a home screen or an application interface (for example, the note editing interface) on the screen A, and display a virtual keyboard on the screen B.

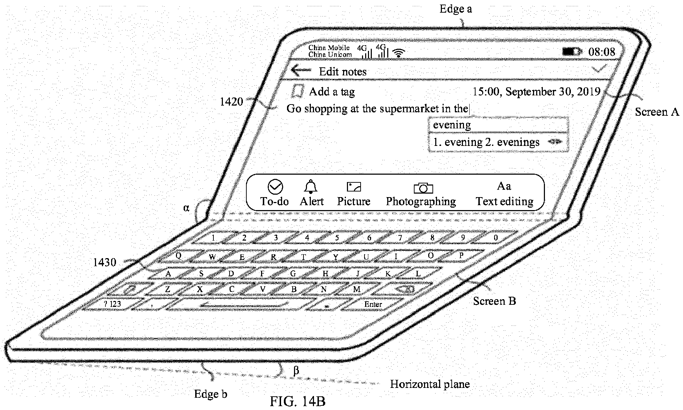

For example, as shown in FIG. 14B, the electronic device 100 changes from an unfolded form to a computer operation mode in a half-folded form. When the electronic device 100 is in the computer support mode in the half-folded form, the electronic device 100 may display a note editing interface 1420 on the screen A, and display a virtual keyboard 1430 on the screen B. The electronic device 100 may receive an input operation performed by the user on the virtual keyboard 1430 on the screen B, and enter text information (for example, "Go shopping at the supermarket in the evening") in the note editing interface 1420 on the screen A.

In a possible implementation, when the electronic device 100 is in a computer operation mode (which can be referred to as a fourth placement posture) in a half-folded form, the electronic device 100 may further identify an operation type corresponding to an application interface displayed on the screen A, and determine, based on the operation type, an operation control interface that needs to be displayed on the screen B. For example, when the application interface displayed on the screen A of the electronic device 100 is a text editing interface such as a document interface or a chat interface, the operation type corresponding to the application interface is a text input, and the electronic device 100 may display a virtual keyboard or a virtual mouse on the screen B. For another example, when the application interface displayed on the screen A of the electronic device 100 is an interface of a game application, the electronic device 100 may display, on the screen B, a game control interface corresponding to the game application. In this way, rich operation interaction manners can be provided for the user for different types of applications, to improve user experience.

**Claims**

1.  A display method applied to an electronic device (100) comprising a processor and a foldable screen, wherein the foldable screen can be folded along a folding line to form a first screen (Screen A) and a second screen (Screen B), each of the first and second screen (Screen A, Screen B) comprising a gyro sensor, wherein the method comprises:

    when detecting that the foldable screen is in an unfolded form, displaying, by the electronic device (100), a first interface on the foldable screen in full screen mode, wherein the first interface runs on a first operating system; and
    when detecting that the foldable screen is switched from the unfolded form to a half-folded form, based on a location relationship between a horizontal plane of a material object and each of the first screen (Screen A) and the second screen (Screen B) detected by the processor based on data detected by the gyro sensors, an outer edge (edge a) of the first screen (Screen A) parallel to the folding line being in contact with the object and an outer edge (edge b) of the second screen (Screen B) parallel to the folding line being in contact with the object, controlling, by the electronic device (100), the first screen (Screen A) to display a second interface and the second screen (Screen B) to display a third interface, wherein
    when the foldable screen is in the unfolded form, an included angle between the first screen (Screen A) and the second screen (Screen B) detected by the processor based on data detected by the gyro sensors, is greater than a first angle threshold; and when the foldable screen is in the half-folded form, the included angle between the first screen (Screen A) and the second screen (Screen B) is between the first angle threshold and a second angle threshold, wherein the first angle threshold is greater than the second angle threshold;
    wherein the controlling, by the electronic device (100), the first screen (Screen A) to display a second interface, and controlling the second screen (Screen B) to display a third interface, based on a location relationship between a horizontal plane and each of the first screen (Screen A) and the second screen (Screen B) specifically comprises:

    determining, by the electronic device (100) based on the location relationship between the horizontal plane and each of the first screen (Screen A) and the second screen (Screen B), that a placement posture of the foldable screen is a first placement posture; and
    controlling, by the electronic device (100), to display the second interface on the first screen (Screen A) by running the first operating system, and to display the third interface on the second screen (Screen B) by running a second operating system, wherein
    when the foldable screen is in the first placement posture, the foldable screen is folded outward, an included angle between the first screen (Screen A) and the horizontal plane is between a third angle threshold and a fourth angle threshold, and an included angle between the second screen (Screen B) and the horizontal plane is between the third angle threshold and the fourth angle threshold, wherein the third angle threshold is greater than the fourth angle threshold.

2.  The method according to claim 1, wherein the method further comprises:
    when detecting that the foldable screen is switched from the half-folded form to a fully folded form, displaying, by the electronic device (100), a fourth interface on the first screen (Screen A), and turning off the second screen (Screen B), wherein the fourth interface runs on the first operating system; and when the foldable screen is in the fully folded form, the included angle between the first screen (Screen A) and the second screen (Screen B) is less than the second angle threshold.

3.  The method according to claim 1, wherein the controlling, by the electronic device (100), to display a second interface on the first screen (Screen A), and to display a third interface on the second screen (Screen B), based on a location relationship between a horizontal plane and each of the first screen (Screen A) and the second screen (Screen B) specifically comprises:

    determining, by the electronic device (100) based on the location relationship between the horizontal plane and each of the first screen (Screen A) and the second screen (Screen B), that a placement posture of the foldable screen is a second placement posture; and
    controlling, by the electronic device (100), the first screen (Screen A) to display the second interface, and turning off the second screen (Screen B), wherein the second interface runs on the first operating system; and when the foldable screen is in the second placement posture, the foldable screen is folded outward, and an included angle between the second screen (Screen B) and the horizontal plane is less than a fifth angle threshold.

4. The method according to claim 3, wherein the second interface comprises a function control; and the method further comprises:

receiving, by the electronic device (100), a first operation performed by a user on the function control; and
in response to the first operation, enabling, by the electronic device (100), a function corresponding to the function control.

5. The method according to claim 4, wherein the enabling, by the electronic device (100), a function corresponding to the function control specifically comprises:

opening, by the electronic device (100), a flash; or
opening, by the electronic device (100), a camera on the first screen (Screen A), and displaying, on the first screen (Screen A), an image captured by the camera on the first screen (Screen A).

6. The method according to claim **1,** wherein the controlling, by the electronic device (100), the first screen (Screen A) to display a second interface, and controlling the second screen (Screen B) to display a third interface, based on a location relationship between a horizontal plane and each of the first screen (Screen A) and the second screen (Screen B) specifically comprises:

determining, by the electronic device (100) based on the location relationship between the horizontal plane and each of the first screen (Screen A) and the second screen (Screen B), that a placement posture of the foldable screen is a third placement posture; and
controlling, by the electronic device (100), the first screen (Screen A) to display the second interface, and controlling running of the second screen (Screen B) to display the third interface, wherein the second interface comprises a first part of displayed content in the first interface, and the third interface comprises a second part of the displayed content in the first interface; and when the foldable screen is in the third placement posture, the foldable screen is folded inward, an included angle between the first screen (Screen A) and the horizontal plane is between a sixth angle threshold and a seventh angle threshold, and an included angle between the second screen (Screen B) and the horizontal plane is between the sixth angle threshold and the seventh angle threshold, wherein the sixth angle threshold is less than 90 degrees, and the seventh angle threshold is greater than 90 degrees.

7. The method according to claim **1,** wherein the controlling, by the electronic device (100), the first screen (Screen A) to display a second interface, and controlling the second screen (Screen B) to display a third interface, based on a location relationship between a horizontal plane and each of the first screen (Screen A) and the second screen (Screen B) specifically comprises:

determining, by the electronic device (100) based on the location relationship between the horizontal plane and each of the first screen (Screen A) and the second screen (Screen B), that a placement posture of the foldable screen is a fourth placement posture; and
controlling, by the electronic device (100), the first screen (Screen A) to display the second interface, determining an operation control corresponding to the second interface, and controlling running of the second screen (Screen B) to display the third interface, wherein the third interface comprises the operation control corresponding to the second interface; and when the foldable screen is in the fourth placement posture, the foldable screen is folded inward, and an included angle between the second screen (Screen B) and the horizontal plane is less than an eighth angle threshold.

8. An electronic device (100), comprising one or more functional modules, wherein the one or more functional modules are configured to perform the display method for a foldable screen according to any one of claims 1 to 7.

9. A computer-readable storage medium, comprising computer instructions, wherein when the computer instructions are run on an electronic device (100), the electronic device (100) is enabled to perform the display method for a foldable screen according to any one of claims 1 to 7.

**Patentansprüche**

1. Anzeigeverfahren, das auf eine elektronische Vorrichtung (100) angewendet wird, die einen Prozessor und einen faltbaren Bildschirm umfasst, wobei der faltbare Bildschirm entlang einer Faltlinie gefaltet werden kann, um einen ersten Bildschirm (Bildschirm A) und einen zweiten Bildschirm (Bildschirm B) zu bilden, wobei jeder des ersten und des zweiten Bildschirms (Bildschirm **A,** Bildschirm B) einen Gyrosensor umfasst, wobei das Verfahren Folgendes umfasst:

wenn detektiert wird, dass der faltbare Bildschirm sich in einer aufgeklappten Form befindet, Anzeigen, durch die elektronische Vorrichtung (100), einer ersten Schnittstelle auf dem faltbaren Bildschirm in einem Vollbildmodus, wobei die erste Schnittstelle auf einem ersten Betriebssystem ausgeführt wird; und

wenn detektiert wird, dass der faltbare Bildschirm von der aufgeklappten Form in eine halb gefaltete Form gewechselt wird, basierend auf einer Lagebeziehung zwischen einer horizontalen Ebene eines materiellen Objekts und jedem des ersten Bildschirms (Bildschirm A) und des zweiten Bildschirms (Bildschirm B), die von dem Prozessor basierend auf Daten detektiert wird, die von den Gyrosensoren detektiert werden, und eine zu der Faltlinie parallele Außenkante (Kante a) des ersten Bildschirms (Bildschirm A) mit dem Objekt in Kontakt steht und eine zu der Faltlinie parallele Außenkante (Kante b) des zweiten Bildschirms (Bildschirm B) mit dem Objekt in Kontakt steht, Steuern, durch die elektronische Vorrichtung (100), des ersten Bildschirms (Bildschirm A), um eine zweite Schnittstelle anzuzeigen, und des zweiten Bildschirms (Bildschirm B), um eine dritte Schnittstelle anzuzeigen, wobei

wenn sich der faltbare Bildschirm in der aufgeklappten Form befindet, ein zwischen dem ersten Bildschirm (Bildschirm A) und dem zweiten Bildschirm (Bildschirm B) eingeschlossener Winkel, der durch den Prozessor basierend auf Daten detektiert wird, die von den Gyrosensoren detektiert werden, größer als ein erster Winkelschwellenwert ist; und wenn sich der faltbare Bildschirm in der halb gefalteten Form befindet, der zwischen dem ersten Bildschirm (Bildschirm A) und dem zweiten Bildschirm (Bildschirm B) eingeschlossene Winkel zwischen dem ersten Winkelschwellenwert und einem zweiten Winkelschwellenwert liegt, wobei der erste Winkelschwellenwert größer als der zweite Winkelschwellenwert ist;

wobei das Steuern, durch die elektronische Vorrichtung (100), des ersten Bildschirms (Bildschirm A), um eine zweite Schnittstelle anzuzeigen, und Steuern des zweiten Bildschirms (Bildschirm B), um eine dritte Schnittstelle anzuzeigen, basierend auf einer Lagebeziehung zwischen einer horizontalen Ebene und jedem des ersten Bildschirms (Bildschirm A) und des zweiten Bildschirms (Bildschirm B) insbesondere Folgendes umfasst:

Bestimmen, durch die elektronische Vorrichtung (100) basierend auf der Lagebeziehung zwischen der horizontalen Ebene und jedem des ersten Bildschirms (Bildschirm A) und des zweiten Bildschirms (Bildschirm B), dass eine Platzierungsposition des faltbaren Bildschirms eine erste Platzierungsposition ist; und

Steuern, durch die elektronische Vorrichtung (100), um die zweite Schnittstelle auf dem ersten Bildschirm (Bildschirm A) durch Ausführen des ersten Betriebssystems anzuzeigen und die dritte Schnittstelle auf dem zweiten Bildschirm (Bildschirm B) durch Ausführen eines zweiten Betriebssystems anzuzeigen, wobei wenn sich der faltbare Bildschirm in der ersten Platzierungsposition befindet, der faltbare Bildschirm nach außen gefaltet ist, ein zwischen dem ersten Bildschirm (Bildschirm A) und der horizontalen Ebene eingeschlossener Winkel zwischen einem dritten Winkelschwellenwert und einem vierten Winkelschwellenwert liegt und ein zwischen dem zweiten Bildschirm (Bildschirm B) und der horizontalen Ebene eingeschlossener Winkel zwischen dem dritten Winkelschwellenwert und dem vierten Winkelschwellenwert liegt und wobei der dritte Winkelschwellenwert größer als der vierte Winkelschwellenwert ist.

2. Verfahren nach Anspruch 1, wobei das Verfahren ferner Folgendes umfasst:
wenn detektiert wird, dass der faltbare Bildschirm von der halb gefalteten Form in eine vollständig gefaltete Form gewechselt wird, Anzeigen, durch die elektronische Vorrichtung (100), einer vierten Schnittstelle auf dem ersten Bildschirm (Bildschirm A) und Ausschalten des zweiten Bildschirms (Bildschirm B), wobei die vierte Schnittstelle auf dem ersten Betriebssystem ausgeführt wird; und wenn sich der faltbare Bildschirm in der vollständig gefalteten Form befindet, der zwischen dem ersten Bildschirm (Bildschirm A) und dem zweiten Bildschirm (Bildschirm B) eingeschlossene Winkel kleiner als der zweite Winkelschwellenwert ist.

3. Verfahren nach Anspruch 1, wobei das Steuern, durch die elektronische Vorrichtung (100), um eine zweite Schnittstelle auf dem ersten Bildschirm (Bildschirm A) anzuzeigen und eine dritte Schnittstelle auf dem zweiten Bildschirm (Bildschirm B) anzuzeigen, basierend auf einer Lagebeziehung zwischen einer horizontalen Ebene und jedem des ersten Bildschirms (Bildschirm A) und des zweiten Bildschirms (Bildschirm B) insbesondere Folgendes umfasst:

> Bestimmen, durch die elektronische Vorrichtung (100) basierend auf der Lagebeziehung zwischen der horizontalen Ebene und jedem des ersten Bildschirms (Bildschirm A) und des zweiten Bildschirms (Bildschirm B), dass eine Platzierungsposition des faltbaren Bildschirms eine zweite Platzierungsposition ist; und
> Steuern, durch die elektronische Vorrichtung (100), des ersten Bildschirms (Bildschirm A), um die zweite Schnittstelle anzuzeigen, und Ausschalten des zweiten Bildschirms (Bildschirm B), wobei die zweite Schnittstelle auf dem ersten Betriebssystem ausgeführt wird; und wenn sich der faltbare Bildschirm in der zweiten Platzierungsposition befindet, der faltbare Bildschirm nach außen gefaltet ist und ein zwischen dem zweiten Bildschirm (Bildschirm B) und der horizontalen Ebene eingeschlossener Winkel kleiner als ein fünfter Winkelschwellenwert ist.

**4.** Verfahren nach Anspruch 3, wobei die zweite Schnittstelle eine Funktionssteuerung umfasst; und wobei das Verfahren ferner Folgendes umfasst:

> Empfangen, durch die elektronische Vorrichtung (100), einer zweiten Operation, die durch einen Benutzer an der Funktionssteuerung durchgeführt wird; und
> als Reaktion auf die erste Operation, Aktivieren, durch die elektronische Vorrichtung (100), einer Funktion, die der Funktionssteuerung entspricht.

**5.** Verfahren nach Anspruch 4, wobei das Aktivieren, durch die elektronische Vorrichtung (100), einer Funktion, die der Funktionssteuerung entspricht, insbesondere Folgendes umfasst:

> Öffnen, durch die elektronische Vorrichtung (100), eines Blitzes; oder
> Öffnen, durch die elektronische Vorrichtung (100), einer Kamera auf dem ersten Bildschirm (Bildschirm A) und Anzeigen, auf dem ersten Bildschirm (Bildschirm A), eines Bilds, das von der Kamera auf dem ersten Bildschirm (Bildschirm A) aufgenommen wurde.

**6.** Verfahren nach Anspruch 1, wobei das Steuern, durch die elektronische Vorrichtung (100), des ersten Bildschirms (Bildschirm A), um eine zweite Schnittstelle anzuzeigen, und Steuern des zweiten Bildschirms (Bildschirm B), um eine dritte Schnittstelle anzuzeigen, basierend auf einer Lagebeziehung zwischen einer horizontalen Ebene und jedem des ersten Bildschirms (Bildschirm A) und des zweiten Bildschirms (Bildschirm B) insbesondere Folgendes umfasst:

> Bestimmen, durch die elektronische Vorrichtung (100) basierend auf der Lagebeziehung zwischen der horizontalen Ebene und jedem des ersten Bildschirms (Bildschirm A) und des zweiten Bildschirms (Bildschirm B), dass eine Platzierungsposition des faltbaren Bildschirms eine dritte Platzierungsposition ist; und
> Steuern, durch die elektronische Vorrichtung (100), des ersten Bildschirms (Bildschirm A), um die zweite Schnittstelle anzuzeigen, und Steuern des Ausführens des zweiten Bildschirms (Bildschirm B), um die dritte Schnittstelle anzuzeigen, wobei die zweite Schnittstelle einen ersten Teil des angezeigten Inhalts in der ersten Schnittstelle umfasst und die dritte Schnittstelle einen zweiten Teil des angezeigten Inhalts in der ersten Schnittstelle umfasst; und wenn sich der faltbare Bildschirm in der dritten Platzierungsposition befindet, der faltbare Bildschirm nach innen geklappt ist, ein zwischen dem ersten Bildschirm (Bildschirm A) und der horizontalen Ebene eingeschlossener Winkel zwischen einem sechsten Winkelschwellenwert und einem siebten Winkelschwellenwert liegt und ein zwischen dem zweiten Bildschirm (Bildschirm B) und der horizontalen Ebene eingeschlossener Winkel zwischen dem sechsten Winkelschwellenwert und dem siebten Winkelschwellenwert liegt und wobei der sechste Winkelschwellenwert kleiner als 90 Grad ist und der siebte Winkelschwellenwert größer als 90 Grad ist.

**7.** Verfahren nach Anspruch 1, wobei das Steuern, durch die elektronische Vorrichtung (100), des ersten Bildschirms (Bildschirm A), um eine zweite Schnittstelle anzuzeigen, und Steuern des zweiten Bildschirms (Bildschirm B), um eine dritte Schnittstelle anzuzeigen, basierend auf einer Lagebeziehung zwischen einer horizontalen Ebene und jedem des ersten Bildschirms (Bildschirm A) und des zweiten Bildschirms (Bildschirm B) insbesondere Folgendes umfasst:

> Bestimmen, durch die elektronische Vorrichtung (100) basierend auf der Lagebeziehung zwischen der horizontalen Ebene und jedem des ersten Bildschirms (Bildschirm A) und des zweiten Bildschirms (Bildschirm B), dass eine Platzierungsposition des faltbaren Bildschirms eine vierte Platzierungsposition ist; und
> Steuern, durch die elektronische Vorrichtung (100), des ersten Bildschirms (Bildschirm A), um die zweite Schnittstelle anzuzeigen, Bestimmen einer Operationssteuerung, die der zweiten Schnittstelle entspricht, und Steuern des Ausführens des zweiten Bildschirms (Bildschirm B), um die dritte Schnittstelle anzuzeigen, wobei die dritte Schnittstelle die Operationssteuerung umfasst, die der zweiten Schnittstelle entspricht; und wenn sich der faltbare Bildschirm in der vierten Platzierungsposition befindet, der faltbare Bildschirm nach innen gefaltet ist und ein zwischen dem zweiten Bildschirm (Bildschirm B) und der horizontalen Ebene eingeschlossener Winkel kleiner als ein achter Winkelschwellenwert ist.

**8.** Elektronische Vorrichtung (100), die ein oder mehrere Funktionsmodule umfasst, wobei das eine oder die mehreren Funktionsmodule dazu konfiguriert sind, das Anzeigeverfahren für einen faltbaren Bildschirm nach einem der Ansprüche 1 bis 7 durchzuführen.

**9.** Computerlesbares Speichermedium, das Computeranweisungen umfasst, wobei, wenn die Computeranweisungen auf einer elektronischen Vorrichtung (100) ausgeführt werden, die elektronische Vorrichtung (100) in die Lage versetzt wird, das Anzeigeverfahren für einen faltbaren Bildschirm nach einem der Ansprüche 1 bis 7 durchzuführen.

**Revendications**

**1.** Procédé d'affichage appliqué à un dispositif électronique (100) comprenant un processeur et un écran pliable, dans lequel l'écran pliable peut être plié selon une ligne de pliage pour former un premier écran (Écran A) et un second écran (Écran B), chacun des premier et second écrans (Écran A, Écran B) comprenant un capteur gyroscopique, dans lequel le procédé comprend :

lors de la détection du fait que l'écran pliable est sous une forme dépliée, l'affichage, par le dispositif électronique (100), d'une première interface sur l'écran pliable en mode plein écran, dans lequel la première interface fonctionne sur un premier système d'exploitation ; et
lors de la détection du passage de l'écran pliable de la forme dépliée à une forme à moitié pliée, sur la base d'une relation d'emplacement entre un plan horizontal d'un objet matériel et chacun du premier écran (Écran A) et du second écran (Écran B) détectés par le processeur sur la base des données détectées par les capteurs gyroscopiques, un bord extérieur (bord a) du premier écran (Écran A) parallèle à la ligne de pliage étant en contact avec l'objet et un bord extérieur (bord b) du second écran (Écran B) parallèle à la ligne de pliage étant en contact avec l'objet, la commande, par le dispositif électronique (100) ,de l'affichage d'une deuxième interface sur le premier écran (Écran A) et la commande de l'affichage d'une troisième interface sur le second écran (Écran B), dans lequel lorsque l'écran pliable est sous forme dépliée, un angle compris entre le premier écran (Écran A) et le second écran (Écran B) détecté par le processeur sur la base de données détectées par les capteurs gyroscopiques, est supérieur à un premier seuil d'angle ; et lorsque l'écran pliable est sous forme à moitié pliée, l'angle compris entre le premier écran (Écran A) et le second écran (Écran B) est compris entre le premier seuil d'angle et un deuxième seuil d'angle, dans lequel le premier seuil d'angle est supérieur au deuxième seuil d'angle ;
dans la commande, par le dispositif électronique (100), de l'affichage d'une deuxième interface sur le premier écran (Écran A) et la commande de l'affichage d'une troisième interface sur le second écran (Écran B), sur la base d'une relation d'emplacement entre un plan horizontal et chacun du premier écran (Écran A) et du second écran (Écran B) comprend spécifiquement :

la détermination, par le dispositif électronique (100) sur la base de la relation d'emplacement entre le plan horizontal et chacun du premier écran (Écran A) et du second écran (Écran B), du fait qu'une posture de placement de l'écran pliable est une première posture de placement ; et
la commande, par le dispositif électronique (100), de l'affichage d'une deuxième interface sur le premier écran (Écran A) et la commande de l'affichage d'une troisième interface sur le second écran (Écran B) en exécutant un second système d'exploitation, dans lequel
lorsque l'écran pliable est dans la première posture de placement, l'écran pliable est plié vers l'extérieur, un angle compris entre le premier écran (Écran A) et le plan horizontal est compris entre un troisième seuil d'angle et un quatrième seuil d'angle, et un angle compris entre le second écran (Écran B) et le plan horizontal est compris entre le troisième seuil d'angle et le quatrième seuil d'angle, dans lequel le troisième seuil d'angle est supérieur au quatrième seuil d'angle.

**2.** Procédé selon la revendication 1, dans lequel le procédé comprend également :
lors de la détection du passage de l'écran pliable de la forme à moitié pliée à une forme entièrement pliée, l'affichage, par le dispositif électronique (100), d'une quatrième interface sur le premier écran (Écran A) et l'extinction du second écran (Écran B), dans lequel la quatrième interface fonctionne sur le premier système d'exploitation ; et lorsque l'écran pliable est sous la forme entièrement pliée, l'angle compris entre le premier écran (Écran A) et le second écran (Écran B) est inférieur au deuxième seuil d'angle.

3. Procédé selon la revendication 1, dans lequel la commande, par le dispositif électronique (100), de l'affichage d'une deuxième interface sur le premier écran (Écran A) et de l'affichage d'une troisième interface sur le second écran (Écran B), sur la base d'une relation d'emplacement entre un plan horizontal et chacun du premier écran (Écran A) et du second écran (Écran B) comprend spécifiquement :

   la détermination, par le dispositif électronique (100) sur la base de la relation d'emplacement entre le plan horizontal et chacun du premier écran (Écran A) et du second écran (Écran B), du fait qu'une posture de placement de l'écran pliable est une deuxième posture de placement ; et
   la commande, par le dispositif électronique (100), du premier écran (Écran A) pour afficher la deuxième interface, et l'extinction du second écran (Écran B), dans lequel la deuxième interface fonctionne sur le premier système d'exploitation ; et lorsque l'écran pliable est dans la deuxième posture de placement, l'écran pliable est plié vers l'extérieur, et un angle compris entre le second écran (Écran B) et le plan horizontal est inférieur à un cinquième seuil d'angle.

4. Procédé selon la revendication 3, dans lequel la deuxième interface comprend une commande de fonction ; et le procédé comprend également :

   la réception, par le dispositif électronique (100), d'une première opération réalisée par un utilisateur sur la commande de fonction ; et
   en réponse à la première opération, l'activation, par le dispositif électronique (100), d'une fonction correspondant à la commande de fonction.

5. Procédé selon la revendication 4, dans lequel l'activation, par le dispositif électronique (100), d'une fonction correspondant à la commande de fonction comprend spécifiquement :

   l'ouverture, par le dispositif électronique (100), d'un flash ; ou
   l'ouverture, par le dispositif électronique (100), d'une caméra sur le premier écran (Écran A), et l'affichage, sur le premier écran (Écran A), d'une image capturée par la caméra sur le premier écran (Écran A).

6. Procédé selon la revendication 1, dans lequel la commande, par le dispositif électronique (100), de l'affichage d'une deuxième interface sur le premier écran (Écran A) et la commande de l'affichage d'une troisième interface sur le second écran (Écran B), sur la base d'une relation d'emplacement entre un plan horizontal et chacun du premier écran (Écran A) et du second écran (Écran B) comprend spécifiquement :

   la détermination, par le dispositif électronique (100) sur la base de la relation d'emplacement entre le plan horizontal et chacun du premier écran (Écran A) et du second écran (Écran B), du fait qu'une posture de placement de l'écran pliable est une troisième posture de placement ; et
   la commande, par le dispositif électronique (100), du premier écran (Écran A) pour afficher la deuxième interface, et la commande du fonctionnement du second écran (Écran B) pour afficher la troisième interface, dans lequel la deuxième interface comprend une première partie du contenu affiché dans la première interface, et la troisième interface comprend une seconde partie du contenu affiché dans la première interface ;
   et lorsque l'écran pliable est dans la troisième posture de placement, l'écran pliable est plié vers l'intérieur, un angle compris entre le premier écran (Écran A) et le plan horizontal est compris entre un sixième seuil d'angle et un septième seuil d'angle, et un angle compris entre le second écran (Écran B) et le plan horizontal est compris entre le sixième seuil d'angle et le septième seuil d'angle, dans lequel le sixième seuil d'angle est inférieur à 90 degrés, et le septième seuil d'angle est supérieur à 90 degrés.

7. Procédé selon la revendication 1, dans lequel la commande, par le dispositif électronique (100) ,de l'affichage d'une deuxième interface sur le premier écran (Écran A) et la commande de l'affichage d'une troisième interface sur le second écran (Écran B) , sur la base d'une relation d'emplacement entre un plan horizontal et chacun du premier écran (Écran A) et du second écran (Écran B) comprend spécifiquement :

   la détermination, par le dispositif électronique (100) sur la base de la relation d'emplacement entre le plan horizontal et chacun du premier écran (Écran A) et du second écran (Écran B), du fait qu'une posture de placement de l'écran pliable est une quatrième posture de placement ; et
   la commande, par le dispositif électronique (100), du premier écran (Écran A) pour afficher la deuxième interface, la détermination d'une commande d'opération correspondant à la deuxième interface, et la commande du fonctionnement du second écran (Écran B) pour afficher la troisième interface, dans lequel la troisième interface comprend la commande d'opération correspondant à la deuxième interface ; et lorsque l'écran pliable est dans la quatrième posture de placement, l'écran pliable est plié vers l'intérieur, et un angle compris entre le second écran (Écran B) et le plan horizontal est inférieur à un huitième seuil d'angle.

8. Dispositif électronique (100), comprenant un ou plusieurs modules fonctionnels, dans lequel les un ou plusieurs modules fonctionnels sont configurés pour réaliser le procédé d'affichage pour un écran pliable selon l'une quelconque des revendications 1 à 7.

9. Support de stockage lisible par ordinateur, comprenant des instructions informatiques, dans lequel, lorsque les instructions informatiques sont exécutées sur un dispositif électronique (100), le dispositif électronique (100) est activé pour réaliser le procédé d'affichage d'un écran pliable selon l'une quelconque des revendications 1 à 7.

11a

Folding edge

100

11b

FIG. 1(a)

FIG. 1(b)

Screen B

Screen A

100

FIG. 1(c)

Folding edge

100

21a

21b

FIG. 2(a)

FIG. 2(b)

Screen A

Screen B

100

FIG. 2(c)

FIG. 3

Folding line

100

α

Screen B

Screen A

Edge a

Edge b

β

Horizontal plane

FIG. 4A

FIG. 4B

FIG. 4C

FIG. 4D

Electronic device 100

Antenna 1

Antenna 2

| Mobile communications module<br>2G/3G/4G/5G<br>[150] | Wireless communications module<br>BT/WLAN/GNSS/NFC/IR/FM<br>[160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

USB port [130]

Charging input

Charging management module [140]

Processor [110]

Power management module [141]

Battery [142]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 5

FIG. 6A

FIG. 6B

FIG. 6C

FIG. 7

100

810

China Mobile 4G 4G 📶 📶 📶 🛜　　　　　　　　　　　🔋 08:08
China Unicom

Weather　Stocks　Calculator　Settings　Email　Alipay

QQ　WeChat　Gallery　Music　Videos　App Store

● ● ○

Phone　Messages　Contacts　Camera

FIG. 8A

FIG. 8B

FIG. 8C

FIG. 9A

FIG. 9B

FIG. 9C

FIG. 9D

FIG. 10A

FIG. 10B

FIG. 10C

FIG. 10D

FIG. 11A

FIG. 11B

FIG. 11C

100

China Mobile 4G 4G
China Unicom ᴵᴵᴵᴵ ᴵᴵᴵᴵ 📶                                    ■▶ 08:08

1210

Weather      Stocks      Calculator      Settings      Email      Alipay

QQ          WeChat        Gallery         Music       Videos     App Store

● ● ○

Phone      Messages      Contacts      Camera

FIG. 12A

FIG. 12B

100

1310

FIG. 13A

FIG. 13B

China Mobile 4G 4G
China Unicom ⠂⠇⠇ ⠂⠇⠇ 📶          ◼️▯ 08:08

←   Edit notes                                   ✓

1410

🔖 Add a tag                         15:00, September 30, 2019

| ⊘ | 🔔 | 🖼 | 📷 | Aa |
|---|---|---|---|---|
| To-do | Alert | Picture | Photographing | Text editing |

FIG. 14A

FIG. 14B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109840061 A